# EUROPEAN PATENT SPECIFICATION

(11) **EP 2 832 569 B1**
(45) Date of publication and mention of the grant of the patent: **09.12.2015**
(21) Application number: 14175298.0
(22) Date of filing: 01.07.2014
(51) Int. Cl.: B60K 6/48, B60K 6/547, B60K 6/387, B60W 20/00, B60W 10/02, B60W 10/06, B60W 10/08, B60W 10/111

(54) **Drive apparatus for vehicle**
Antriebsvorrichtung für Fahrzeuge
Appareil d'entraînement pour véhicule

(30) Priority: 31.07.2013 JP 2013159461
(43) Date of publication of application: 04.02.2015
(73) Proprietor: AISIN SEIKI KABUSHIKI KAISHA, Kariya-shi, Aichi 448-8650 (JP)
(72) Inventor: Harada, Shinya, Kariya-shi, Aichi 448-8650 (JP); Tojo, Takeshi, Kariya-shi, Aichi 448-8650 (JP); Shishido, Yo, Kariya-shi, Aichi 448-8650 (JP); Murakami, Yoshiro, Kariya-shi, Aichi 448-8650 (JP)
(74) Representative: Kramer Barske Schmidtchen Patentanwälte PartG mbB

(56) References cited:
- EP-A2- 2 527 178
- WO-A1-2013/007886
- WO-A1-2013/051128
- DE-A1-102010 048 857

## Description

### TECHNICAL FIELD

This disclosure generally relates to a drive apparatus for a vehicle. A drive apparatus with the features of the preamble of claim 1 is disclosed in WO 2013/051128 A1.

### BACKGROUND DISCUSSION

A known drive apparatus for a hybrid vehicle including an engine and a motor generator as power sources is disclosed in JP2012-131497A which will be hereinafter referred to as Reference 1. In the hybrid vehicle, in a case where the engine is started by the motor generator during a driving of the vehicle, an engagement of a clutch disposed between the motor generator and the engine is achieved by two phases. Specifically, in a first engagement phase, a speed to increase an engagement amount of the clutch is enhanced until a necessary engagement amount for an engine start is obtained. As a result, the engine start is rapidly completed. In a second engagement phase, the speed to increase the engagement amount of the clutch is reduced so that a driving torque of the motor generator is inhibited from being transmitted to the engine more than necessary. Accordingly, a deceleration feeling in the hybrid vehicle caused by decrease of driving force at the time of the engine start by the motor generator is restrained.

Nevertheless, in the aforementioned drive apparatus, in a case where the engine is started by the motor generator during the driving of the vehicle, the engagement amount of the clutch increases gradually to obtain the engagement of the clutch so as to restrain a deceleration feeling in the hybrid vehicle. That is, in a case where the engine is started (i.e., ignited) by the motor generator during the driving of the vehicle, a load applied to the clutch may increase.

A need thus exists for a drive apparatus for a vehicle that restrains or minimizes a load applied to a clutch in a case where an engine is started by a motor generator during a driving of the vehicle.

### SUMMARY

According to an aspect of this disclosure, a drive apparatus for a vehicle includes a transmission including an input shaft inputting a driving force of an engine, an output shaft outputting the driving force of the engine that is changed at the transmission to driving wheels, and a transmission clutch that includes an input element connected to the input shaft to rotate, an output element connected to the output shaft to rotate, and an engagement element connecting the input element and the output element in engageable and disengageable manner, the input element and the output element being selectively engaged and disengaged relative to each other, a transmission drive mechanism driving the engagement element of the transmission, a clutch selectively engaging and disengaging between an output shaft of the engine and the input shaft of the transmission to form an engagement state and a disengagement state, a clutch drive mechanism driving the clutch, a motor generator configured to output a driving force to the output shaft of the transmission, a clutch/motor torque increase portion controlling the transmission clutch to be engaged to increase a clutch torque of the clutch and increase a motor torque of the motor generator by an amount corresponding to the increase of the clutch torque in a case where an engine start request serving as a request for starting the engine is obtained during a motor driving of the vehicle that is achieved by the driving force of the motor generator, a transmission drive mechanism biasing portion driving the transmission drive mechanism to bias the engagement element of the transmission clutch that is engaged in a release direction in a case where the clutch torque reaches an engine start request torque for starting the engine, and an engine combustion start portion starting a combustion of the engine by a combustion starting member in a case where a rotation speed of the engine reaches a predetermined value.

Accordingly, until the combustion of the engine is started, the motor torque of the motor generator is transmitted to the clutch that is engaged with the engine via the output element, the engagement element, and the input element. The transmission clutch is in the engagement state. That is, the engine is rotated by the driving force of the motor generator. An engine torque shows a negative value. At this time, in a case where the clutch torque reaches the engine start request torque for starting the engine, the transmission drive mechanism biasing portion drives the transmission drive mechanism to bias the engagement element of the transmission clutch that is engaged in the release direction. Then, in a case where the rotation speed of the engine reaches the predetermined value by the driving force of the motor generator and the combustion of the engine is started, the engine torque increases from a negative value to a positive value. During the increase of the engine torque, an initial state where torque applied to the transmission clutch from the motor generator is greater than torque applied to the transmission clutch from the clutch (the engine) turns to a state where torque applied to the transmission clutch from the motor generator is smaller than torque applied to the transmission clutch from the clutch (the engine). During the aforementioned change of state, in a case where torque applied to the transmission clutch from the motor generator becomes substantially equal to torque applied to the transmission clutch from the clutch (the engine), the engagement element is moved in the release direction by the transmission drive mechanism biasing portion and the transmission clutch is brought to the release state.

Accordingly, the increase of engine torque after the combustion start of the engine is utilized to release the transmission clutch. After the release of the transmission clutch, the engine torque that is transmitted via the clutch may be inhibited from being transmitted to the driving wheels, and further from the motor generator. Thus, in a case where the engine is started by the motor generator during the driving of the vehicle even in the engagement state of the clutch, a load of engine torque applied to the clutch may be restrained to be small.

Either one of the input element and the output element, and the engagement element include gear teeth formed by dog teeth, and the dog teeth of either one of the input element and the output element, and the dog teeth of the engagement element are directly meshed with one another in a case where either one of the input element and the output element, and the engagement element are engaged with each other.

Accordingly, even in the transmission including a so-called dog clutch, a load applied to the clutch may be restrained to be small in a case where the engine is started by the motor generator during the driving of the vehicle.

The drive apparatus for the vehicle further includes a first transmission clutch re-engagement portion and a first clutch re-engagement portion, wherein after the engagement element is released by the combustion of the engine that is started by the engine combustion start portion and in a case where the rotation speed of the engine reaches a target rotation speed, the clutch drive mechanism is driven to bring the clutch to the disengagement state, and in a case where the clutch torque is smaller than a predetermined value, the first transmission clutch re-engagement portion drives the transmission drive mechanism to bias the engagement element in an engagement direction, the first clutch re-engagement portion driving the clutch drive mechanism to bring the clutch to the engagement state after the transmission clutch is engaged by the first transmission clutch re-engagement portion.

Accordingly, in a case where a rotation speed of the input shaft of the transmission (i.e., the input element of the transmission clutch) is relatively slow, the rotation speed of the input element of the transmission clutch rotatably connected to the clutch increases by the engine torque. Thereafter, the rotation speed gradually decreases by the clutch that is brought to the disengagement state. That is, a rotation difference between the input element of the transmission clutch of which rotation speed is decreasing, and the output element rotatably connected to the motor generator may turn to a predetermined value (for example, 100 rpm). At this time, the engagement element is moved in the engagement direction by the first transmission clutch re-engagement portion so that the transmission clutch is brought to the engagement state. Thereafter the clutch is brought to the engagement state.

Accordingly, even in a case where the rotation speed of the input shaft of the transmission (i.e., the input element of the transmission clutch) is relatively slow, the transmission clutch is released, and the clutch is first disengaged after the engine is started. Then, after the transmission clutch is engaged, the clutch is again brought to the engagement state. Thus, a load applied to both the clutch and the transmission clutch is reduced after the engine start to thereby securely bring both the clutches into the engagement state.

The drive apparatus for the vehicle further includes a second transmission clutch re-engagement portion and a second clutch re-engagement portion, wherein after the engagement element is released by the combustion of the engine that is started by the engine combustion start portion, the clutch drive mechanism is driven to bring the clutch to the disengagement state, and in a case where the clutch torque is smaller than a predetermined value and the rotation speed of the engine reaches a target rotation speed, the clutch drive mechanism is driven to bring the clutch in the disengagement state to the engagement state at a predetermined clutch torque and then to the disengagement state, thereafter the second transmission clutch re-engagement portion drives the transmission drive mechanism to bias the engagement element in an engagement direction, the second clutch re-engagement portion driving the clutch drive mechanism to bring the clutch to the engagement state after the transmission clutch is engaged by the second transmission clutch re-engagement portion.

Accordingly, in a case where the rotation speed of the input shaft of the transmission (i.e., the input element of the transmission clutch) is relatively high, the clutch is first brought to the disengagement state. Thereafter, in a case where the engine rotation speed reaches the target rotation speed, the clutch in the disengagement state is brought to the engagement state by the predetermined clutch torque and then brought to the disengagement state again (so-called double clutch). The rotation speed of the input element of the transmission clutch increases and thereafter gradually decreases by the disengagement of the clutch. That is, the rotation difference between the input element of the transmission clutch of which rotation speed is decreasing and the output element rotatably connected to the motor generator may reach the predetermined value, for example, 100 rpm. At this time, the engagement element is moved in the engagement direction by the second transmission clutch re-engagement portion to bring the transmission clutch to be engaged. Afterwards, the clutch is brought to the engagement state.

Accordingly, even in a case where the rotation speed of the input shaft of the transmission (i.e., the input element of the transmission clutch) is relatively high, the transmission clutch is released, and the clutch is first disengaged after the engine is started to perform the double clutch. Then, after the transmission clutch is engaged, the clutch is again brought to the engagement state. Thus, a load applied to both the clutch and the transmission clutch is reduced after the engine start to thereby securely bring both the clutches into the engagement state.

A synchronizer mechanism is disposed among the input element, the output element, and the engagement element, and the synchronizer mechanism is operated to engage either one of the input element and the output element relative to the engagement element in order to engage either one of the input element and the output element with the engagement element.

Accordingly, even in the transmission including a so-called synchronizer mechanism, a load applied to the clutch may be restrained to be small in a state where the engine is started by the motor generator during the driving of the vehicle.

The drive apparatus for the vehicle further includes a third transmission clutch re-engagement portion and a third clutch re-engagement portion, wherein after the engagement element is released by the combustion of the engine that is started by the engine combustion start portion, the clutch drive mechanism is driven to bring the clutch to the disengagement state, and in a case where the clutch torque is smaller than a predetermined value, the third transmission clutch re-engagement portion drives the transmission drive mechanism to bias the engagement element in an engagement direction, the third clutch re-engagement portion driving the clutch drive mechanism to bring the clutch to the engagement state after the transmission clutch is engaged by the third transmission clutch re-engagement portion.

Accordingly, even in the transmission including the so-called synchronizer mechanism, the clutch is first disengaged and thereafter the engagement element is moved in the engagement direction by the third transmission clutch re-engagement portion so that the transmission clutch is brought to the engagement state by the synchronizer mechanism. Thereafter the clutch is brought to the engagement state. Thus, after the transmission clutch is released and the engine is started, the clutch is first disengaged and then the transmission clutch is engaged. Thereafter the clutch is again engaged. As a result, a load applied to the clutch after the engine start is restrained to be small and each of the clutch and the transmission clutch may be securely engaged.

The clutch/motor torque increase portion controls the clutch torque to increase non-linearly so that a change rate of the clutch torque is enlarged along passage of time until a point of time at which the engine rotation speed starts increasing by the increase of the clutch torque, and the change rate of the clutch torque is reduced along passage of time after the point of time at which the engine rotation speed starts increasing.

Accordingly, until the point of time at which the engine rotation speed starts increasing, the clutch torque may be restrained to be small overall. In the engagement state of the clutch, a load applied to the clutch may be thus reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a configuration of a hybrid vehicle at which a drive apparatus for a vehicle according to a first embodiment disclosed here is mounted;
Fig. 2 is a skeleton diagram illustrating a schematic configuration of the drive apparatus for the vehicle illustrated in Fig. 1;
Figs. 3A and 3B are a flowchart of a control program performed by a hybrid ECU illustrated in Fig. 1;
Fig. 4 is a time chart illustrating operations obtained by the flowchart in Figs. 3A and 3B;
Fig. 5 is a diagram explaining an appropriate clutch torque during time t1 to time t3 illustrated in Fig. 4;
Fig. 6 is a flowchart of another control program performed by the hybrid ECU illustrated in Fig. 1;
Fig. 7 is a time chart illustrating operations obtained by the flowchart in Fig. 6;
Fig. 8 is a skeleton diagram illustrating a configuration of a transmission clutch in the hybrid vehicle at which the drive apparatus for the vehicle according to a second embodiment disclosed here is mounted;
Fig. 9 is a flowchart of a control program in the hybrid vehicle at which the drive apparatus for the vehicle according to the second embodiment is mounted; and
Fig. 10 is a time chart illustrating operations obtained by the flowchart in Fig. 9.

### DETAILED DESCRIPTION

A hybrid vehicle at which a drive apparatus for a vehicle according to a first embodiment is applied will be explained with reference to the attached drawings.

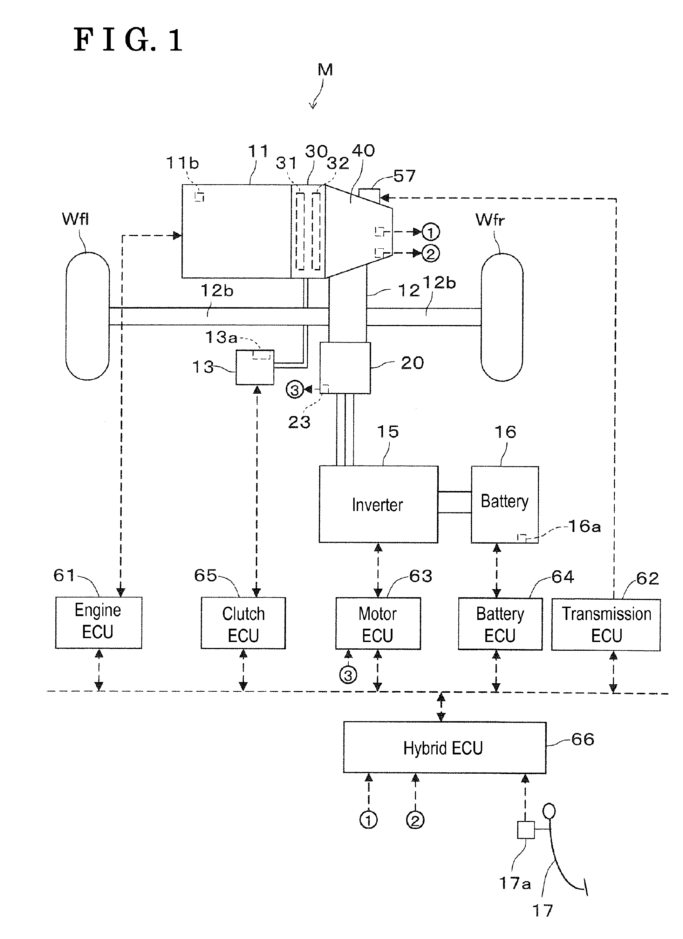

As illustrated in Fig. 1, a hybrid vehicle M is a vehicle that drives wheels, i.e., left and right front wheels Wfl and Wfr, for example, by a hybrid system. The hybrid system is a powertrain in which two power sources, i.e., an engine 11 and a motor generator 20, are utilized in combination. In the present embodiment, at least one of the engine 11 and the motor generator 20 drives the wheels.

The hybrid vehicle M includes the engine 11, the motor generator 20, a clutch 30, a clutch drive mechanism 13, a transmission 40, a transmission drive mechanism 57, a differential apparatus 12, the wheels Wfl and Wfr serving as driving wheels, and various ECUs, specifically, an engine ECU 61, a transmission ECU 62, a motor ECU 63, a battery ECU 64, a clutch ECU 65, and a hybrid ECU 66. The wheels Wfl and Wfr are driven by a driving force of at least one of the engine 11 and the motor generator 20.

The drive apparatus of the hybrid vehicle M is configured to include the motor generator 20, the clutch 30, the clutch drive mechanism 13, the transmission 40, the transmission drive mechanism 57, and the hybrid ECU 66 (or the transmission ECU 62, the motor ECU 63 and the clutch ECU 65).

The engine 11 which is mounted at the hybrid vehicle M drives the wheels Wfl and Wfr. The engine 11 constituted by a petrol engine or a diesel engine, for example, is operated by combustion of fuel to generate the driving force. The driving force of the engine 11 is configured to be output from a crankshaft 11 a (output shaft) to be transmitted to the wheels Wfl and Wfr via the clutch 30, the transmission 40, and the differential apparatus 12. The engine 11 includes an ignition apparatus 11 b (an ignition plug) serving as a combustion starting member for starting combustion of the engine 11.

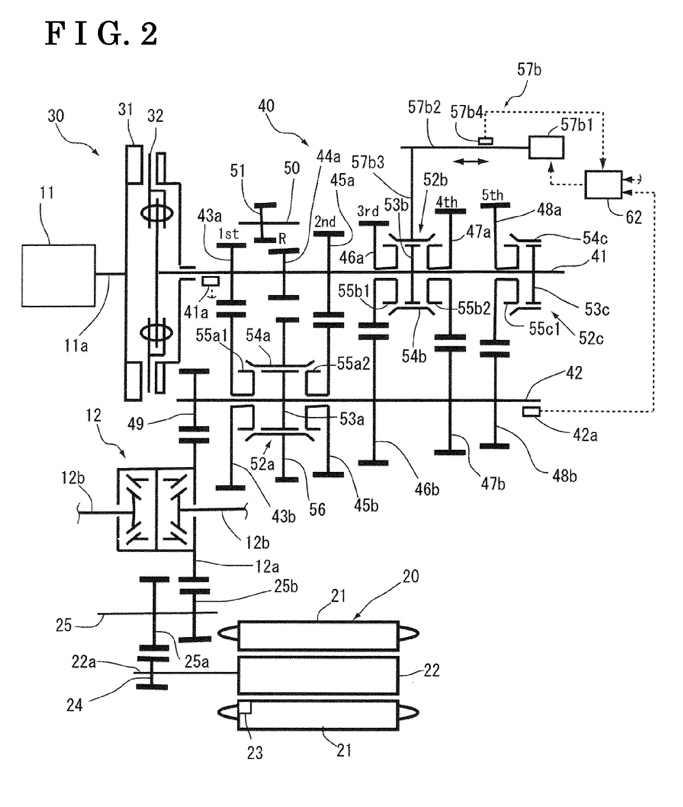

The motor generator 20 may output the driving force to an output shaft 42 of the transmission 40 via the differential apparatus 12 and to the wheels Wfl and Wfr. The motor generator 20 is constituted by a synchronous motor, for example, an IPM motor. Specifically, as illustrated in Fig. 2, the motor generator 20 includes a stator 21, a rotor 22 provided at a radially inner side of the stator 21 to be coaxially rotatable relative to the stator 21, and a motor rotation speed sensor 23.

The stator 21 is formed by plural coils wound to form a magnetic field for rotating the rotor 22. The rotor 22 is formed by plural magnets disposed along a circumferential direction. The motor rotation speed sensor 23 is provided at the stator 21 to detect a rotation speed of the rotor 22, i.e., of the motor generator 20. The rotation speed of the motor generator 20 detected by the motor rotation speed sensor 23 is output to the motor ECU 63. The motor generator 20 is not limited to a synchronous motor for driving the wheels. Hereinafter, the rotation speed and the number of rotations are the same in meaning.

The motor generator 20 assists an output of the engine 11 in a case where the vehicle is accelerated so as to enhance the driving force. On the other hand, in a case where the vehicle is braked, the motor generator 20 generates electricity so that a regenerative braking force is generated at the wheels.

The driving force of the motor generator 20 is transmitted to a motive gear 24 that is integrally provided at an end portion of an output shaft 22a of the motor generator 20. At an intermediate deceleration shaft 25 disposed in parallel to the output shaft 22a, a driven gear 25a meshed with the motive gear 24 and a second driving gear 25b meshed with a ring gear 12a of the differential apparatus 12 are provided. The driving force of the motor generator 20 is transmitted to the second driving gear 25b at a predetermined reduction gear ratio.

Outputs of the engine 11 and the motor generator 20 are transmitted to the ring gear 12a to drive axle shafts 12b, 12b and the driving wheels Wfl and Wfr after a rotation difference is absorbed at the differential apparatus 12 as necessary.

As illustrated in Figs. 1 and 2, the clutch 30 is disposed between the engine 11 and the transmission 40. The clutch 30 blocks a power transmission between the engine 11 and the transmission 40 in a state where the clutch 30 is disengaged, i.e., in a disengagement state. In addition, the clutch 30 allows the power transmission between the engine 11 and the transmission 40 in a state where the clutch 30 is engaged, i.e., in an engagement state. The clutch 30 includes an input member 31 rotatably connected to the output shaft 11 a of the engine 11 and an output member 32 rotatably connected to an input shaft 41 of the transmission 40. The input member 31 and the output member 32 are engaged or disengaged relative to each other to engage or disengage the output shaft 11a of the engine 11 and the input shaft 41 of the transmission 40 relative to each other. In the present embodiment, the clutch 30 is a multiplate wet clutch and is a normally closed clutch for transmitting power in a normal state (i.e., when not controlled).

The clutch drive mechanism 13 is electrically or hydraulically operated to drive the clutch 30 electrically or hydraulically, for example. The clutch drive mechanism 13 drives the clutch 30 to be engaged or disengaged. As illustrated in Fig. 1, the clutch drive mechanism 13 includes a stroke sensor 13a. The stroke sensor 13a detects a clutch stroke serving as an operation amount of the clutch drive mechanism 13 to output a detection result to the clutch ECU 65 (the hybrid ECU 66).

As illustrated in Fig. 2, the transmission 40 includes the input shaft 41 inputting the driving force of the engine 11 and the output shaft 42 outputting the driving force of the engine 11 that is changed at the transmission 40 to the wheels Wfl and Wfr. The output shaft 42 is disposed in parallel to the input shaft 41. A first driving gear 43a, a reverse driving gear 44a, and a second driving gear 45a are integrally disposed at the input shaft 41 and a third driving gear 46a, a fourth driving gear 47a, and a fifth driving gear 48a are rotatably disposed at the input shaft 41 in the mentioned order from the side facing the clutch 30. In addition, a first driven gear 43b and a second driven gear 45b are rotatably disposed at the output shaft 42 and a third driven gear 46b, a fourth driven gear 47b and a fifth driven gear 48b are integrally disposed at the output shaft 42 in the mentioned order from the side facing the clutch 30 so as to be constantly meshed with the aforementioned gears provided at the input shaft 41 respectively. A driving gear 49 is integrally disposed at an end portion of the output shaft 42 so as to face the clutch 30. The driving gear 49 is meshed with the ring gear 12a of the differential apparatus 12.

An input shaft rotation speed sensor 41 a is provided in the vicinity of the input shaft 41 for detecting a rotation speed of the input shaft 41. An output shaft rotation speed detection sensor 42a is provided in the vicinity of the output shaft 42 for detecting a rotation speed of the output shaft 42. Detection results of the rotation speed sensors 41 a and 42a are transmitted to the transmission ECU 62.

The transmission 40 also includes a shaft 50 that is parallel to the input shaft 41. A reverse idler gear 51 is rotatably disposed at the shaft 50. The reverse idler gear 51 is movable in an axial direction of the transmission 40. In a state where the reverse idler gear 51 is disposed at a position facing the clutch 30, the reverse idler gear 51 is inhibited from being meshed with the reverse driving gear 44a. On the other hand, in a state where the reverse idler gear 51 is disposed at a position facing the second driving gear 45a, the reverse idler gear 51 may be meshed with the reverse driving gear 44a.

First, second, and third transmission clutches 52a, 52b, and 52c each of which serves as an example of a gear meshing mechanism are provided between the input shaft 41 and the output shaft 42. The first transmission clutch 52a which is disposed between the first driven gear 43b and the second driven gear 45b includes a clutch hub 53a, a sleeve 54a, a clutch ring 55a1, and a clutch ring 55a2. The clutch hub 53a is spline-fitted to the output shaft 42, for example, to integrally rotate with the output shaft 42. The sleeve 54a is spline-fitted to the clutch hub 53a, for example, to be axially slidable at an outer periphery of the clutch hub 53a and integrally rotatable with the clutch hub 53a. The clutch ring 55a1 is provided at a side surface of the first driven gear 43b and includes dog teeth configured to engage with dog teeth of the sleeve 54a. The clutch ring 55a2 is provided at a side surface of the second driven gear 45b and includes dog teeth configured to engage with the dog teeth of the sleeve 54a.

A gear 56 is disposed at an extension portion of the sleeve 54a at an outer periphery. The gear 56 is meshed with the reverse idler gear 51 in a state where the reverse idler gear 51 is meshed with the reverse driving gear 44a to thereby constitute a neutral state and a reverse driving state.

The second transmission clutch 52b which is disposed between the third driving gear 46a and the fourth driving gear 47a includes a clutch hub 53b, a sleeve 54b, a clutch ring 55b1, and a clutch ring 55b2. The clutch hub 53b is spline-fitted to the input shaft 41, for example, to integrally rotate with the input shaft 41. The sleeve 54b is spline-fitted to the clutch hub 53b, for example, to be axially slidable at an outer periphery of the clutch hub 53b and integrally rotatable with the clutch hub 53b. The clutch ring 55b1 is provided at a side surface of the third driving gear 46a and includes dog teeth configured to engage with dog teeth of the sleeve 54b. The clutch ring 55b2 is provided at a side surface of the fourth driving gear 47a and includes dog teeth configured to engage with the dog teeth of the sleeve 54b.

The third transmission clutch 52c which is disposed adjacent to the fifth driving gear 48a includes a clutch hub 53c, a sleeve 54c, and a clutch ring 55c1. The clutch hub 53c is spline-fitted to the input shaft 41, for example, to integrally rotate with the input shaft 41. The sleeve 54c is spline-fitted to the clutch hub 53c, for example, to be axially slidable at an outer periphery of the clutch hub 53c and integrally rotatable with the clutch hub 53c. The clutch ring 55c1 is provided at a side surface of the fifth driving gear 48a and includes dog teeth configured to engage with dog teeth of the sleeve 54c.

The sleeves 54a, 54b, and 54c of the first to third transmission clutches 52a, 52b, and 52c are driven to move in the axial direction by the transmission drive mechanism 57. The transmission drive mechanism 57 includes first to third transmission drive mechanisms. In Fig. 2, only the second transmission drive mechanism, i.e., second transmission drive mechanism 57b that drives the second transmission clutch 52b is illustrated and illustrations of the first and third transmission drive mechanisms are omitted. In the following, a configuration of the second transmission drive mechanism 57b will be explained but each of the first and third transmission drive mechanisms includes a substantially similar configuration to the second transmission drive mechanism 57b.

The second transmission drive mechanism 57b includes a drive actuator 57b1 that is electrically or hydraulically operated, a fork shaft 57b2, and a fork 57b3 provided at an end portion of the fork shaft 57b2 to drive the sleeve 54b to reciprocate in the axial direction. The sleeve 54b is moved by the transmission drive mechanism 57b in the axial direction corresponding to a right-left direction in Fig. 2 so as to be brought to an engagement state in which the dog teeth of the sleeve 54b are meshed with either the dog teeth of the clutch ring 55b1 at a left side in Fig. 2 or the dog teeth of the clutch ring 55b2 at a right side in Fig. 2 for achieving power transmission, and a neutral state in which the dog teeth of the sleeve 54b are inhibited from being meshed with either the dog teeth of the clutch ring 55b1 or the dog teeth of the clutch ring 55b2.

An end portion of the fork 57b3 engages with an outer peripheral groove of the sleeve 54b. A stroke sensor 57b4 is disposed in the vicinity of the fork shaft 57b2 so as to detect a moving amount of the fork shaft 57b2, i.e., a moving amount of the sleeve 54b in the axial direction. The stroke sensor 57b4 is connected to the transmission ECU 62 to transmit detection data to the transmission ECU 62.

The first transmission clutch 52a is constituted by the first driven gear 43b (or the second driven gear 45b) serving as an input element that is connected to the input shaft 41 to rotate, the clutch hub 53a serving as an output element that is connected to the output shaft 42 to rotate, and the sleeve 54a serving as an engagement element that connects the first driven gear 43b (or the second driven gear 45b) and the clutch hub 53a in engageable and disengageable manner. The first driven gear 43b (or the second driven gear 45b) and the clutch hub 53a are selectively engaged and disengaged relative to each other.

In addition, the second transmission clutch 52b is constituted by the clutch hub 53b serving as the input element that is connected to the input shaft 41 to rotate, the third driving gear 46a (or the fourth driving gear 47a) serving as the output element that is connected to the output shaft 42 to rotate, and the sleeve 54b serving as the engagement element that connects the clutch hub 53b and the third driving gear 46a (or the fourth driving gear 47a) in engageable and disengageable manner. The clutch hub 53b and the third driving gear 46a (or the fourth driving gear 47a) are selectively engaged and disengaged relative to each other.

Further, the third transmission clutch 52c is constituted by the clutch hub 53c serving as the input element that is connected to the input shaft 41 to rotate, the fifth driving gear 48a serving as the output element that is connected to the output shaft 42 to rotate, and the sleeve 54c serving as the engagement element that connects the clutch hub 53c and the fifth driving gear 48a in engageable and disengageable manner. The clutch hub 53c and the fifth driving gear 48a are selectively engaged and disengaged relative to each other.

In the hybrid vehicle M, the engine 11 is electrically connected to the engine ECU 61 and the transmission drive mechanism 57 is electrically connected to the transmission ECU 62. The motor generator 20 is electrically connected to the motor ECU 63 via an inverter 15 that is connected to a battery 16. The battery 16 is electrically connected to the battery ECU 64. The clutch drive mechanism 13 is electrically connected to the clutch ECU 65. The engine ECU 61, the transmission ECU 62, the motor ECU 63, the battery ECU 64, and the clutch ECU 65 are connected to be communicable to one another via CAN, for example, and are also connected to be communicable to the hybrid ECU 66 via CAN, for example.

The engine ECU 61 is an electronic control unit (ECU) that controls the engine 11. The engine ECU 61 inputs a rotation speed of the engine 11 by a rotation speed sensor provided at the engine 11. The rotation speed sensor detects a rotation speed of the output shaft 11 a of the engine 11, i.e., engine rotation speed.

The transmission ECU 62 is an electronic control unit that controls the transmission 40. The transmission ECU 62 transmits a control command to the transmission drive mechanism 57 to establish gear positions. The motor ECU 63 is an electronic control unit controlling the motor generator 20 via the inverter 15 so that the aforementioned driving states are obtained. The inverter 15 is electrically connected to the battery 16 serving as a DC power source. The inverter 15 converts an AC voltage input from the motor generator 20 into a DC voltage that is supplied to the battery 16 or, on the contrary, converts a DC voltage input from the battery 16 to an AC voltage that is output to the motor generator 20.

The battery ECU 64 is an electronic control unit that monitors a state of the battery 16. The state of charge (SOC) of the battery 16 is derived from a detection result of a battery state detection sensor 16a provided at the battery 16. The clutch ECU 65 is an electronic control unit that controls the clutch 30. The clutch ECU 65 transmits a control command to each of an electromagnetic switching valve and an electric pump constituting the clutch drive mechanism 13 so as to control the clutch 30 to be engaged or disengaged.

The hybrid ECU 66 is an electronic control unit that controls the aforementioned ECUs 61 to 65 comprehensively. For example, the hybrid ECU 66 controls the engine 11, the motor generator 20, the clutch 30, and the like so that the engine 11 is started by the motor generator 20 in a case where the vehicle is started, so that the driving force of the engine 11 is assisted by the driving force of the motor generator 20 in a case where the vehicle is accelerated, and so that the vehicle is driven only by the driving force of the engine 11 without the assist of the motor generator 20 in a case where the vehicle is driven at a high speed. In addition, the hybrid ECU 66 controls so that the vehicle is driven only by the driving force of the motor generator 20. Further, the hybrid ECU 66 controls the motor generator 20 to generate electricity so that the regenerative braking force is generated at the wheels in a case where the vehicle is decelerated (i.e., at a time of braking of the vehicle).

An accelerator sensor 17a is electrically connected to the hybrid ECU 66 so as to detect an opening of an accelerator pedal 17. The accelerator sensor 17a is provided at the accelerator pedal 17 provided at the hybrid vehicle M as illustrated in Fig. 1. A detection result of the accelerator sensor 17a is transmitted to the hybrid ECU 66. Each of the ECUs 61 to 66 includes a CPU portion performing a calculation process, a storage portion storing program, for example, and an input/output portion for exchange of information.

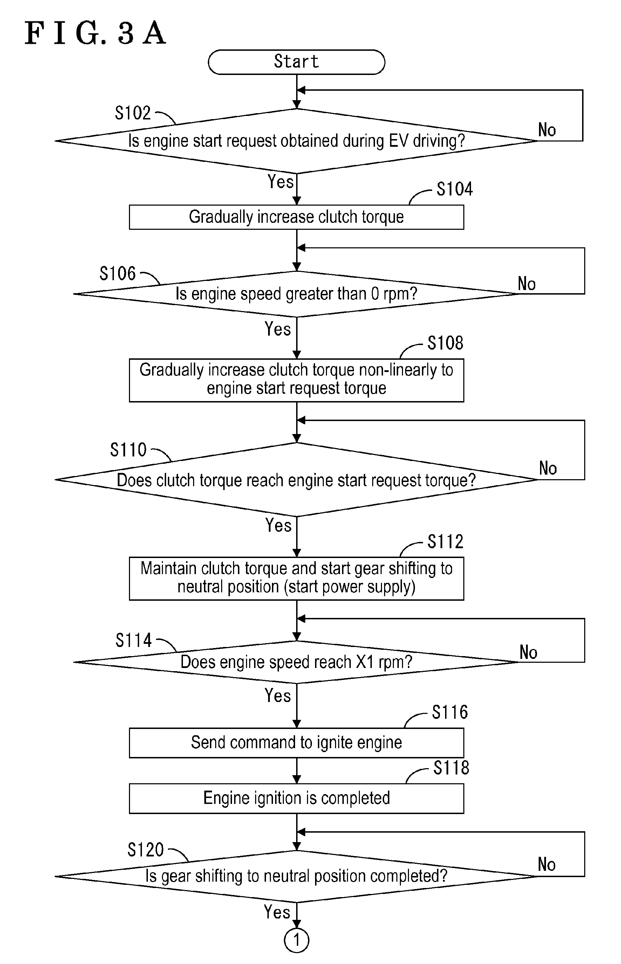

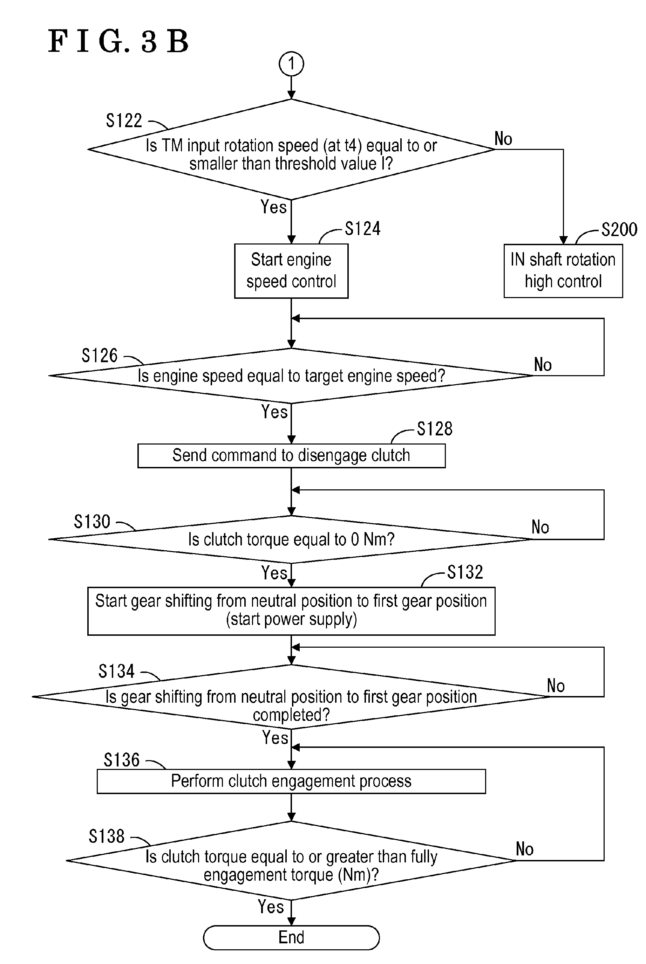

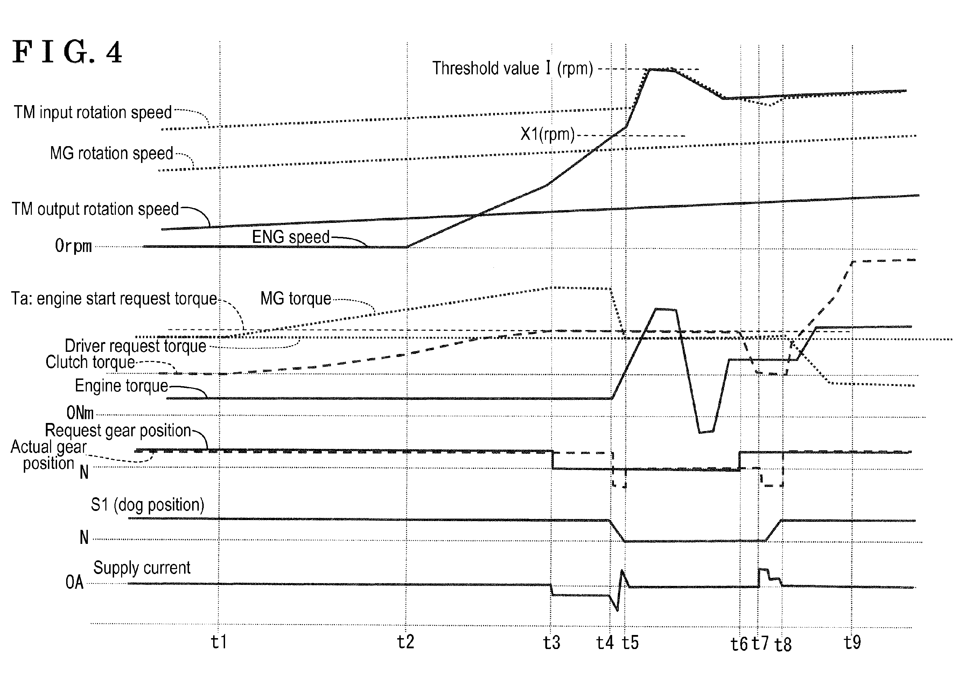

Next, an operation in the hybrid vehicle M will be explained with reference to a flowchart illustrated in Figs. 3A and 3B and a time chart illustrated in Fig. 4. At this time, the hybrid vehicle M is in an EV (electric vehicle) driving state where the hybrid vehicle M is driven only by the driving force of the motor generator 20 and the engine 11 is not started. The hybrid vehicle M starts the EV driving from a stopped state. The transmission 40 is in the first gear position at the start of the EV driving, i.e., the sleeve 54a of the first transmission clutch 52a is meshed with the clutch ring 55a1 of the first driven gear 43b.

The hybrid ECU 66 repeats determining No in step S102 (hereinafter "step" will be omitted) until a start request of the engine 11 (engine start request) is obtained during the EV driving. In a case where the start request of the engine 11 is obtained during the EV driving (at time t1 in Fig. 4), a control program proceeds to S104. In S104, the hybrid ECU 66 controls the clutch drive mechanism 13 to increase a clutch stroke from zero so that the clutch 30 in the disengagement state is gradually brought to the engagement state. As a result, a clutch torque gradually increases to an engine start request torque. S104 serves as a clutch/motor torque increase portion. Further, in S104, the hybrid ECU 66 controls the motor generator 20 so that a motor generator torque (i.e., a motor torque which will be hereinafter referred to as a MG torque) also increases from a value corresponding to a driver request torque to a value that conforms to the increase of the aforementioned clutch torque.

Accordingly, the MG torque is utilized as the clutch torque and a driving torque. Even in a case where the clutch torque increases, the MG torque increases in association with the increase of the clutch torque. Thus, the driving torque is inhibited from decreasing so as to achieve the driving of the hybrid vehicle M by torque required by a driver (driver request torque). The driver request torque is determined on a basis of the opening of the accelerator pedal 17 detected by the accelerator sensor 17a and the gear position of the transmission 40.

In order to obtain a desired clutch torque at the clutch 30, the hybrid ECU 66 controls the clutch drive mechanism 13 based on a map indicating a relationship between the clutch stroke and the clutch torque to thereby obtain the clutch stroke corresponding to the aforementioned desired clutch torque. The map is specified so that the clutch torque is zero in a state where the clutch stroke is zero, and the clutch torque increases in association with increase of the clutch stroke.

The hybrid ECU 66 controls the clutch torque to increase non-linearly so that a change rate of the clutch torque is enlarged along passage of time until point of time at which the engine rotation speed starts increasing by the increase of the clutch torque (i.e., from time t1 to time t2), and the change rate of the clutch torque is reduced along passage of time after the point of time at which the engine rotation speed starts increasing (i.e., from time t2 to time t3).

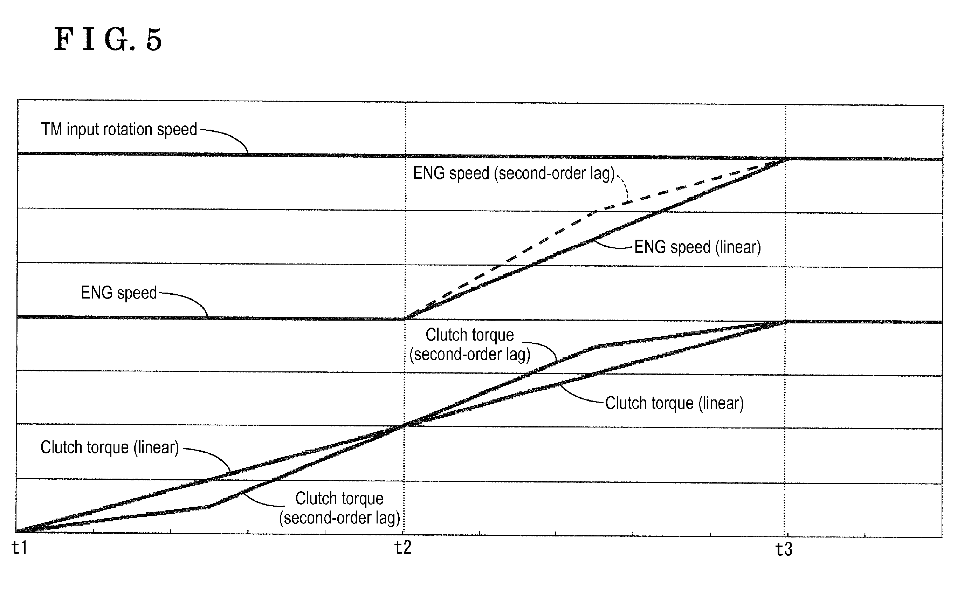

A specific example of the aforementioned non-linear increase of the clutch torque is an increase with second-order lag as illustrated in Fig. 5. According to the clutch torque that increases with second-order lag, as compared to the clutch torque that increases linearly, the clutch torque is small overall from time t1 to time t2 and is large overall from time t2 to time t3.

Energy applied to the clutch 30 is represented by an integrated value of [rotation difference] x 2 x π / 60 x [clutch torque]. The rotation difference is a difference between the number of rotations (rotation speed) of the output member 32 and the number of rotations (rotation speed) of the input member 31 of the clutch 30. The number of rotations (rotation speed) of the output member 32 corresponds to TM input rotations (TM input rotation speed), i.e., the number of rotations (rotation speed) of the input shaft 41 of the transmission 40. The number of rotations (rotation speed) of the input member 31 corresponds to engine rotations (engine speed), i.e., the number of rotations (rotation speed) of the output shaft 11 a of the engine 11.

From time t1 to time t2, the number of engine rotations is zero and the number of rotations of the input shaft 41 is constant. The rotation difference is thus constant. The energy applied to the clutch 30 is smaller by the clutch torque that increases with second-order lag than the clutch torque that increases linearly. On the other hand, from time t2 to time t3, the engine rotations increase from zero and ultimately match the rotations of the input shaft 41. At this time, the engine rotations increase with second-order lag in the same way as the clutch torque. Thus, the rotation difference is smaller than a case where the engine rotations increase linearly. The energy applied to the clutch 30 is thus smaller by the clutch torque that increases with second-order lag than the clutch torque that increases linearly.

Accordingly, until the increase of the engine rotations (the engine speed) is started (i.e., time t1 to time t2), the rotation difference is constant. In addition, the clutch torque may be restrained to be small overall as compared to the clutch torque that increases linearly. Thus, the energy applied to the clutch 30 may be restrained to be small overall as compared to a case where the clutch torque increases linearly. In the engagement state of the clutch 30, a load applied to the clutch 30 may be reduced.

In a case where the clutch stroke gradually increases so that the clutch torque gradually increases, the input member 31 and the output member 32 of the clutch 30 in a fully disengagement state then make contact with each other. At this time, as long as a static friction force is larger than a force for rotating the engine 11 by the clutch torque, the engine 11 is inhibited from rotating. In a case where the force that rotates the engine 11 by the clutch torque is greater than the static friction force, the engine 11 starts rotating. In a case where the number of rotations (i.e., the speed) of the engine 11 becomes greater than zero (at time t2), the hybrid ECU 66 determines Yes in S106 and the program proceeds to S108.

In S108, after the start of increase of the engine rotations (rotation speed) by the increase of clutch torque, i.e., after time t2, the hybrid ECU 66 controls the clutch torque to increase non-linearly in a way that the change rate of the clutch torque decreases along passage of time. S108 serves as the clutch/motor torque increase portion. During time t2 to time t3, the engine rotations increase from zero and ultimately match the rotations of the input shaft 41. At this time, in the same way as the clutch torque, the engine rotations increase with second-order lag. The rotation difference is thus smaller than the case where the engine rotations increase linearly.

Accordingly, from time t2 to time t3, the energy applied to the clutch 30 is smaller as compared to the case where the clutch torque increases linearly. Depending on a way to specify the non-linear increase of the clutch torque, however, the energy applied to the clutch 30 may be smaller in the case where the clutch torque increases linearly. In such case, it is desirable to increase the clutch torque linearly.

In a case where the clutch torque further increases to reach the engine start request torque serving as torque for staring the engine 11 (at time t3), the hybrid ECU 66 determines Yes in S110 and the program proceeds to S112. In S112 that serves as a transmission drive mechanism biasing portion, the hybrid ECU 66 starts controlling the clutch torque to be maintained at the engine start request torque. At the same time, the gear position is started to be shifted to a neutral position from the present gear position by the transmission drive mechanism 57. Specifically, the hybrid ECU 66 drives the first transmission drive mechanism that drives the first transmission clutch 52a, i.e., starts supplying an electric power to a drive actuator of the first transmission clutch 52a, so as to apply a force to the sleeve 54a of the first transmission clutch 52a that is meshed with the clutch ring 55a1 of the first driven gear 43b in a direction where the meshing between the sleeve 54a and the clutch ring 55a1 is released (in a meshing release direction or release direction) (i.e., in a direction towards the second driven gear 45b). Even in a case where the force is applied in the aforementioned meshing release direction, the engine 11 is rotated by the MG torque, and the clutch ring 55a1 of the first driven gear 43b and the sleeve 54a are meshed with each other. The sleeve 54a is inhibited from moving in the meshing release direction. The hybrid ECU 66 also starts controlling the MG torque to be maintained at a constant value.

In a case where the number of rotations (rotation speed) of the engine 11 reaches a predetermined value X1 rpm (at time t4), the hybrid ECU 66 determines Yes in S114 and then send a command to ignite the engine 11 in S116 serving as an engine combustion start portion. The aforementioned predetermined value X1 is desirably specified to correspond to the number of idling rotations of the engine 11. In a case where the engine 11 is a petrol engine, the hybrid ECU 66 controls the ignition apparatus 11 b to ignite and thereafter combustion of the engine 11 is started (i.e., the engine 11 is started). The hybrid ECU 66 completes ignition of the engine 11 in S118.

Because of the start of combustion of the engine 11, the engine 11 rotates by itself so that the engine torque increases and turns to a positive value from a negative value. During the increase of engine torque, an initial state where torque applied to the first transmission clutch 52a from the motor generator 20 is greater than torque applied to the first transmission clutch 52a from the clutch 30 (the engine 11) turns to a state where torque applied to the first transmission clutch 52a from the motor generator 20 is smaller than torque applied to the first transmission clutch 52a from the clutch 30 (the engine 11). During the aforementioned change of state, torque applied to the first transmission clutch 52a from the motor generator 20 becomes substantially equal to torque applied to the first transmission clutch 52a from the clutch 30 (the engine 11). At this time, the meshing between the clutch ring 55a1 of the first driven gear 43b and the sleeve 54a is released and the sleeve 54a (the engagement element) is moved in the meshing release direction by the transmission drive mechanism that drives to bias the first transmission clutch 52a in the meshing release direction. As a result, the first transmission clutch 52a is brought to the release state.

After completion of gear shifting to the neutral position from the present gear position (at time t5), the hybrid ECU 66 determines Yes in S120 and the program proceeds to S122. The hybrid ECU 66 determines that gear shifting to the neutral position is completed in S120 in a case where a stroke detected by a stroke sensor of the first transmission drive mechanism that drives the first transmission clutch 52a is positioned at N (neutral position). When the hybrid ECU 66 determines that the gear shifting to the neutral position from the present gear position is completed, the hybrid ECU 66 stops the power supply to the drive actuator of the first transmission clutch 52a that is started in S112.

During time t5 to time t6, in a case where combustion of the engine 11 is started, the number of rotations of the engine 11 rapidly increases so as to generate an explosion torque by the engine 11. Nevertheless, because the first transmission clutch 52a is in the release state, the explosion torque is inhibited from being transmitted to the driving wheels (i.e., to the differential apparatus 12) by the first transmission clutch 52a.

In addition, the hybrid ECU 66 reduces the MG torque to the driver request torque. Thus, even in a case where the engine 11 and the wheels Wfl and Wfr are separated from each other, the driver request torque is applied to the wheels Wfl and Wfr from the motor generator 20, which inhibits a driver from having uncomfortable feeling. Further, while the hybrid ECU 66 maintains the clutch 30 in the engagement state, the hybrid ECU 66 maintains the clutch torque at the engine start request torque.

In S122, the hybrid ECU 66 determines whether or not the number of rotations of the input shaft 41 of the transmission 40 (TM input rotations) detected by the input shaft rotation speed sensor 41a at point of time at which the number of rotations of the engine 11 reaches the predetermined value X1 rpm (i.e., at time t4) is equal to or smaller than a threshold value I rpm. At this time, instead of point of time at which the rotations of the engine 11 reach the predetermined value X1 rpm, the aforementioned determination may be made at point of time at which the clutch torque reaches the engine start request torque (i.e., at time t3). The threshold value I is desirably specified to be a value obtained by adding a predetermined value to the number of idling rotations.

In a case where the number of rotations of the input shaft 41 of the transmission 40 (TM input rotations) is equal to or smaller than the threshold value I rpm, the hybrid ECU 66 determines Yes in S122 and the program proceeds to S124 and following steps to perform an IN shaft rotation low control. The IN shaft rotation low control is a control to bring the first transmission clutch 52a that is released (disengaged) to be engaged and the clutch 30 to a fully engagement state in a case where the number of rotations of the input shaft 41 of the transmission 40 is relatively smaller than the number of idling rotations of the engine 11.

On the other hand, in a case where the number of rotations of the input shaft 41 of the transmission 40 (TM input rotations) is greater than the threshold value I rpm, the hybrid ECU 66 determines No in S122 and the program proceeds to S200 to perform an IN shaft rotation high control. The IN shaft rotation high control is a control to bring the first transmission clutch 52a that is released (disengaged) to be engaged and the clutch 30 to the fully engagement state in a case where the number of rotations of the input shaft 41 of the transmission 40 is relatively greater than the number of idling rotations of the engine 11.

Next, details of the IN shaft rotation low control will be explained. In S124, the hybrid ECU 66 starts an engine rotation number (engine speed) control in which a feedback control is performed on the number of rotations of the engine 11. In a case where the number of rotations of the engine 11 matches a target number of rotations of the engine 11 (at time t6), the hybrid ECU 66 determines Yes in S126 and the program proceeds to S128.

In S128, the hybrid ECU 66 transmits a command to the clutch drive mechanism 13 so that the clutch 30 is brought to the disengagement state. The clutch drive mechanism 13 drives the clutch torque to turn to zero (i.e., the clutch stroke to turn to zero). In a case where the clutch torque turns to zero (i.e., the clutch stroke turns to zero) (at time t7), i.e., the clutch torque is smaller than a predetermined value, the hybrid ECU 66 determines Yes in S130 and the program proceeds to S 132.

The hybrid ECU 66 starts establishment of the gear position by the transmission drive mechanism 57 in S132 serving as a first transmission clutch re-engagement portion. Specifically, the hybrid ECU 66 drives the transmission drive mechanism that drives the first transmission clutch 52a, i.e., starts power supply to the drive actuator of the first transmission clutch 52a, to apply a force to the sleeve 54a of the first transmission clutch 52a in the neutral position in which the first transmission clutch 52a is not meshed with either the clutch ring 55a1 of the first driven gear 43b or the clutch ring 55a2 of the second driven gear 45b in a direction where the sleeve 54a is meshed with the first driven gear 43b (towards the first driven gear 43b, i.e., in a meshing direction or an engagement direction).

When the establishment of the gear position is completed (at time t8), the hybrid ECU 66 determines Yes in S134 and the program proceeds to S136. The hybrid ECU 66 determines that the establishment of the gear position is completed in S134 in a case where a stroke detected by the stroke sensor of the transmission drive mechanism that drives the first transmission clutch 52a reaches a value S1 (dog position) corresponding to a meshing position. Once the hybrid ECU 66 determines the completion of establishment of the gear position, the hybrid ECU 66 stops the power supply to the drive actuator of the first transmission clutch 52a that is started in S132.

The hybrid ECU 66 performs a clutch engagement process for bringing the clutch 30 to the fully engagement state in S136 serving as a first clutch re-engagement portion. The clutch engagement process is a process for bringing the clutch 30 from the disengagement state to the fully engagement state. The clutch 30 is controlled by the clutch drive mechanism 13 so that the clutch stroke reaches a fully engagement point.

Until the clutch torque reaches a fully engagement torque, the hybrid ECU 66 determines No in S138 to repeat the clutch engagement process. Once the clutch torque reaches the fully engagement torque (at time t9), the hybrid ECU 66 terminates the clutch engagement process and the process of the present flowchart is finished. In S138, whether or not the clutch torque reaches the fully engagement torque is determined on a basis of whether or not the clutch stroke detected by the stroke sensor 13a reaches or goes beyond the fully engagement point.

According to the aforementioned embodiment, the hybrid ECU 66 includes steps S104 and S108 serving as the clutch/motor torque increase portion for controlling the transmission clutch 52a to be engaged to increase the clutch torque of the clutch 30 and increase the motor torque of the motor generator 20 by the amount corresponding to the increase of the clutch torque in a case where the engine start request serving as a request for starting the engine 11 is obtained during a motor driving (EV driving) of the vehicle that is achieved only by the driving force of the motor generator 20 (at time t1), step S112 serving as the transmission drive mechanism biasing portion for driving the transmission drive mechanism 57 to bias the engagement element (i.e., the sleeve 54a) of the transmission clutch 52a that is engaged in the release direction in a case where the clutch torque reaches the engine start request torque for starting the engine 11 (at time t3, Yes in S110), and step S116 serving as the engine combustion start portion for starting the combustion of the engine 11 by the ignition apparatus 11 b (combustion starting member) in a case where the rotation speed (rotation numbers) of the engine 11 reaches the predetermined value X1 (at time t4, Yes in S114).

Accordingly, until the combustion of the engine 11 is started, the motor torque of the motor generator 20 is transmitted to the clutch 30 that is engaged with the engine 11 via the clutch hub 53a (the output element), the sleeve 54a (the engagement element), and the first driven gear 43b (the input element). The first transmission clutch 52a is in the engagement state. That is, the engine 11 is rotated by the driving force of the motor generator 20. The engine torque shows a negative value. At this time, in a case where the clutch torque reaches the engine start request torque for starting the engine 11 (at time t3), the hybrid ECU 66 serving as the transmission drive mechanism biasing portion biases the sleeve 54a of the first transmission clutch 52a in the engagement state to operate in the release direction by the driving of the transmission drive mechanism 57. Then, in a case where the rotation speed of the engine 11 reaches the predetermined value X1 by the driving force of the motor generator 20 and the combustion of the engine 11 is started, the engine torque increases from the negative value to the positive value. During the increase of the engine torque, the initial state where torque applied to the first transmission clutch 52a from the motor generator 20 is greater than torque applied to the first transmission clutch 52a from the clutch 30 (the engine 11) turns to the state where torque applied to the first transmission clutch 52a from the motor generator 20 is smaller than torque applied to the first transmission clutch 52a from the clutch 30 (the engine 11). During the aforementioned change of state, in a case where torque applied to the first transmission clutch 52a from the motor generator 20 becomes substantially equal to torque applied to the first transmission clutch 52a from the clutch 30 (the engine 11), the sleeve 54a (the engagement element) is moved in the release direction by the hybrid ECU 66 (the transmission drive mechanism biasing portion) and the first transmission clutch 52a is brought to the release state (disengagement state).

Accordingly, the increase of engine torque after the combustion start of the engine 11 is used to release the first transmission clutch 52a. After the release of the first transmission clutch 52a, the engine torque that is transmitted via the clutch 30 may be inhibited from being transmitted to the driving wheels Wfl, and Wfr, and further from the motor generator 20. Thus, in a case where the engine 11 is started by the motor generator 20 during the EV driving even in the engagement state of the clutch 30, a load of engine torque applied to the clutch 30 may be restrained to be small.

In the aforementioned embodiment, the gear teeth of the input element (for example, the first driven gear 43b) or the output element (for example, the clutch hub 53a), and the gear teeth of the engagement element (for example, the sleeve 54a) are formed by dog teeth (i.e., a so-called dog clutch). In a case where either the input element or the output element is engaged with the engagement element, the dog teeth are meshed with one another without a synchronous mechanism. Therefore, even in the transmission including a so-called dog clutch, a load applied to the clutch 30 may be restrained to be small in a case where the engine 11 is started by the motor generator 20 during the EV driving.

In addition, in the aforementioned drive apparatus for the vehicle, the hybrid ECU 66 further includes step S132 serving as the first transmission clutch re-engagement portion and step S136 serving as the first clutch re-engagement portion. After the engagement element (for example, the sleeve 54a) is released by the combustion of the engine 11 that is started in S116 (the engine combustion start portion), i.e., after the transmission clutch (for example, the first transmission clutch 52a) is released, and in a case where the engine speed (engine rotations) reaches a target rotation speed (target engine rotations substantially similar to target IN shaft rotations), the clutch drive mechanism 13 is driven to bring the clutch 30 to the disengagement state (to disengage the clutch 30). In a case where the clutch torque is smaller than the predetermined value (for example, 0 Nm) (at time t7, Yes in S130), step S132 serving as the first transmission clutch re-engagement portion drives the transmission drive mechanism 57 to bias the engagement element (for example, the sleeve 54a) in the engagement direction. After the transmission clutch (for example, the first transmission clutch 52a) is engaged by step S132 serving as the first transmission clutch re-engagement portion (at time t8), step S136 serving as the first clutch re-engagement portion drives the clutch drive mechanism 13 to bring the clutch 30 to the engagement state (fully engagement state).

Accordingly, in a case where the rotation speed of the input element (for example, the first driven gear 43b) of the input shaft 41 of the transmission 40 (i.e., the transmission clutch, for example, the first transmission clutch 52a) is relatively slow, the rotation speed of the input element of the transmission clutch rotatably connected to the clutch 30 increases by the engine torque. Thereafter, the rotation speed gradually decreases by the clutch 30 that is brought to the disengagement state. That is, a rotation difference between the input element (for example, the first driven gear 43b) of the transmission clutch (for example, the first transmission clutch 52a) of which rotation speed is decreasing, and the output element (for example, the clutch hub 53a) rotatably connected to the motor generator 20 may turn to a predetermined value (for example, 100 rpm). At this time, the engagement element (for example, the sleeve 54a) is moved in the engagement direction by S132 so that the transmission clutch is brought to the engagement state. Thereafter the clutch 30 is brought to the engagement state. An engaging side (for example, the sleeve 54a) and an engaged side (for example the first driven gear 43b) in the first transmission clutch 52a are inhibited from engaging with each other in a case where the rotation difference therebetween is completely zero (phase synchronization). Thus, the aforementioned predetermined value may be desirably specified so that the engagement may be conducted with a certain degree of rotation difference. The predetermined value depends on strength design.

Accordingly, even in a case where the rotation speed of the input element (for example, the first driven gear 43b) of the input shaft 41 of the transmission 40 (i.e., the transmission clutch, for example, the first transmission clutch 52a) is relatively slow, the transmission clutch is released, and the clutch 30 is first disengaged after the engine 11 is started. Then, after the transmission clutch is engaged, the clutch 30 is again brought to the engagement state. Thus, a load applied to both the clutch 30 and the transmission clutch (for example, the first transmission clutch 52a) is reduced after the engine start to thereby securely bring both the clutches in the engagement state.

In the aforementioned embodiment, in S104 and S108 serving as the clutch/motor torque increase portion, the clutch torque is controlled to increase non-linearly so that the change rate of the clutch torque is enlarged along passage of time until the point of time at which the engine speed starts increasing by the increase of the clutch torque (i.e., until time t2), and the change rate of the clutch torque is reduced along passage of time after the point of time at which the engine speed starts increasing (i.e., after time t2). The energy applied to the clutch 30 is indicated by the integrated value of [rotation difference] x 2 x π / 60 x [clutch torque]. The rotation difference is a difference in rotations (rotation speed) between the output member 32 (i.e., the shaft at the motor generator 20) and the input member 31 (i.e., the shaft at the engine 11) of the clutch 30.

Accordingly, until the point of time at which the increase of the engine speed is started (time t2), the rotation difference is constant. As compared to the clutch torque that increases linearly, the clutch torque that increases with second-order lag may be restrained to be small overall. Thus, the energy applied to the clutch 30 may be restrained to be small as compared to the case where the clutch torque increases linearly. In the engagement state of the clutch 30, the load applied to the clutch 30 may be reduced.

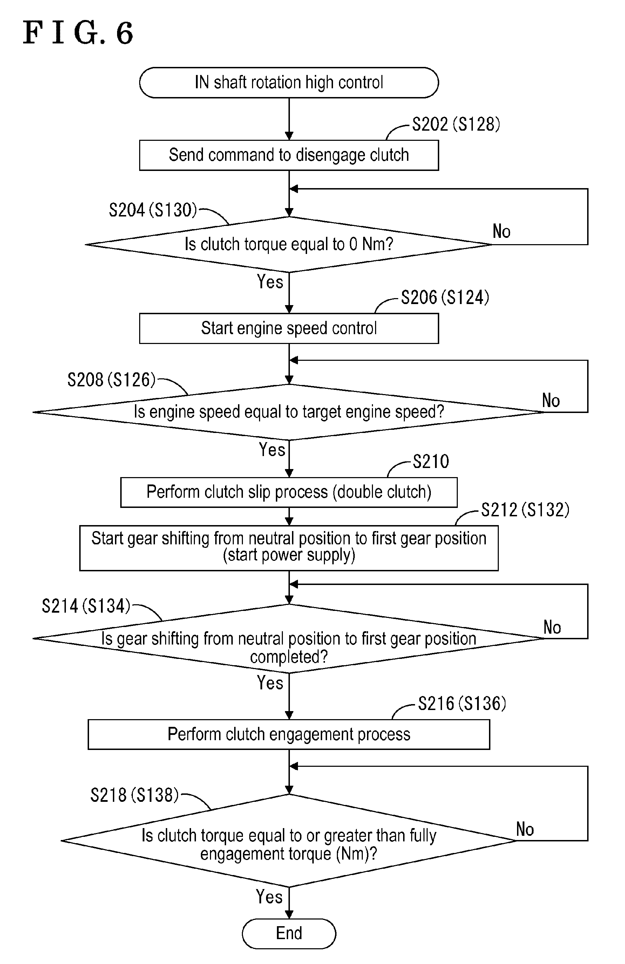

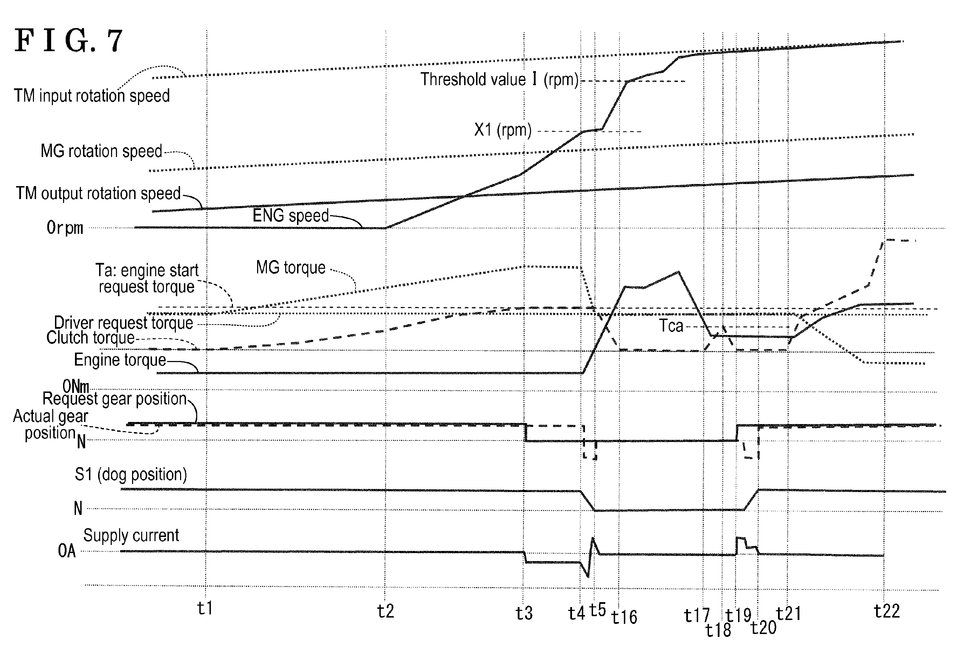

The IN shaft rotation high control will be explained with reference to Figs. 6 and 7. In S202, the hybrid ECU 66 sends a command for disengaging the clutch 30 in the same way as the aforementioned S128. The clutch drive mechanism 13 drives the clutch 30 so that the clutch torque turns to zero (i.e., clutch stroke turns to zero). Then, in a case where the clutch torque turns to zero (i.e., the clutch stroke turns to zero) (at time t16 in Fig. 7), i.e., the clutch torque is smaller than a predetermined value, the hybrid ECU 66 determines Yes in S204 and the program proceeds to S206. The operation in S204 is similar to the operation in S130.

In S206, the hybrid ECU 66 starts the engine rotation number (engine speed) control in which a feedback control is performed on the number of rotations of the engine 11 in the same way as S124. In a case where the number of rotations of the engine 11 matches a target number of rotations of the engine 11 (at time t17), the hybrid ECU 66 determines Yes in S208 (in the same way as S126) and the program proceeds to S210.

In S210, the hybrid ECU 66 starts a clutch slip process (corresponding to a double clutch). The double clutch is an operation for the gear shifting achieved by disengaging the clutch 30 twice. In the present embodiment, the first disengagement of the clutch 30 is conducted during time t16 to time t17 and the second disengagement of the clutch 30 is conducted during time t19 to time t21.

The hybrid ECU 66 drives the clutch drive mechanism 13 to increase the clutch torque of the clutch 30 in the disengagement state to a predetermined clutch torque Tca (i.e., the clutch stroke reaches a stroke corresponding to the predetermined clutch torque Tca, at time t18), and to decrease the clutch torque to zero (i.e., the clutch stroke to zero, at time t19). The predetermined clutch torque Tca is desirably specified to a value so that the torque of the engine 11 of which the rotations are increasing (i.e., greater than before) causes the rotations of the input shaft 41 and further the first driven gear 43b to increase to a predetermined rotation number for a short time period via the clutch 30 in a partially engagement state. According to the aforementioned clutch slip process, the torque of the engine 11 transmitted via the clutch 30 increases the number of rotations of the input shaft 41

When the clutch slip process is completed (time t19), the hybrid ECU 66 starts establishment of the gear position by the transmission drive mechanism 57 in S212 in the same way as S132. Specifically, in S212 serving as a second transmission clutch re-engagement portion, the hybrid ECU 66 drives the transmission drive mechanism that drives the first transmission clutch 52a, i.e., starts the power supply to the drive actuator of the first transmission clutch 52a, to apply a force to the sleeve 54a of the first transmission clutch 52a that is not meshed with the clutch ring 55a1 of the first driven gear 43b or the clutch ring 55a2 of the second driven gear 45b (i.e., the sleeve 54a is in the neutral position) in a direction where the sleeve 54a is meshed with the first driven gear 43b (towards the first driven gear 43b, i.e., in the meshing direction or the engagement direction).

The number of rotations of the clutch ring 55a1 of the first driven gear 43b connected to the input shaft 41 to rotate, the number of rotations of the input shaft 41 increasing by the aforementioned clutch slip process, and the number of rotations of the clutch hub 53a connected to the output shaft 42 to rotate, the output shaft 42 being rotated by the motor generator 20, may be equalized with each other. At this time, because the sleeve 54a is biased towards the first driven gear 43b, the sleeve 54a moves to the first driven gear 43b without resistance to be meshed therewith.

When the establishment of the gear position is completed (time t20), the hybrid ECU 66 determines Yes in S214 and the program proceeds to S216. The hybrid ECU 66 determines that the establishment of the gear position is completed in S214 in a case where a stroke detected by the stroke sensor of the transmission drive mechanism that drives the first transmission clutch 52a reaches the value S1 corresponding to the meshing position.

The hybrid ECU 66 performs the clutch engagement process for bringing the clutch 30 to the fully engagement state in S216 serving as a second clutch re-engagement portion in the same way as S136. In a case where the clutch torque reaches the fully engagement torque (at t22), the hybrid ECU 66 determines Yes in S218 to terminate the clutch engagement process. The process of the present flowchart is finished. The operation in S218 is similar to the operation in S138.

In the aforementioned vehicle drive apparatus for the vehicle, the hybrid ECU 66 further includes step S212 serving as the second transmission clutch re-engagement portion and step S216 serving as the second clutch re-engagement portion. After the engagement element (for example, the sleeve 54a) is released by the combustion of the engine 11 that is started in S116 (the engine combustion start portion), i.e., after the transmission clutch (for example, the first transmission clutch 52a) is released, the clutch drive mechanism 13 is driven to bring the clutch 30 to the disengagement state (to disengage the clutch 30). In a case where the clutch torque is smaller than the predetermined value (for example, 0 Nm) and the engine rotation speed reaches the target rotation speed (i.e., target engine rotations) (at time t17), the clutch drive mechanism 13 is driven to bring the clutch 30 that is in the disengagement state to the engagement state at the predetermined clutch torque (Tca) and then to the disengagement state again (from time t17 to time t19). Thereafter step S212 serving as the second transmission clutch re-engagement portion drives the transmission drive mechanism 57 to bias the engagement element (for example, the sleeve 54a) in the engagement direction. After the transmission clutch is engaged by step S212 serving as the second transmission clutch re-engagement portion (at time t20), step S216 serving as the second clutch re-engagement portion drives the clutch drive mechanism 13 to bring the clutch 30 to the engagement state.

Accordingly, in a case where the rotation speed of the input element (for example, the first driven gear 43b) of the input shaft 41 of the transmission 40 (i.e., the input element of the transmission clutch, for example the first transmission clutch 52a) is relatively high, the clutch 30 is first brought to the disengagement state. Thereafter, in a case where the engine speed reaches the target rotation speed (target speed), the clutch 30 in the disengagement state is brought to the engagement state by the predetermined clutch torque Tca and then brought to the disengagement state again (so-called double clutch). The rotation speed of the input element (for example, the first driven gear 43b) of the transmission clutch (for example, the first transmission clutch 52a) increases and thereafter gradually decreases by the disengagement of the clutch 30. That is, the rotation difference between the input element (for example, the first driven gear 43b) of the transmission clutch of which rotation speed is decreasing and the output element (for example, the clutch hub 53a) rotatably connected to the motor generator 20 may reach the predetermined value, for example, 100 rpm. At this time, in S214, the engagement element (for example, the sleeve 54a) is moved in the engagement direction to bring the transmission clutch to be engaged. Afterwards, the clutch 30 is brought to the engagement state.

Accordingly, even in a case where the rotation speed of the input element (for example, the first driven gear 43b) of the input shaft 41 of the transmission 40 (i.e., the input element of the transmission clutch, for example the first transmission clutch 52a) is relatively high, the transmission clutch (for example, the first transmission clutch 52a) is released, and the clutch 30 is first disengaged after the engine 11 is started to perform the double clutch. Then, after the transmission clutch is engaged, the clutch 30 is again brought to the engagement state. Thus, a load applied to both the clutch 30 and the transmission clutch (for example, the first transmission clutch 52a) is reduced after the engine start to thereby securely bring both the clutches in the engagement state.

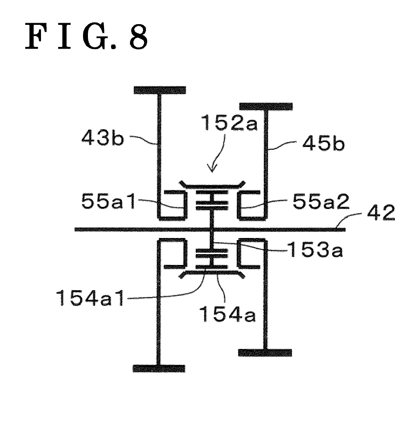

A second embodiment will be explained with reference to Figs. 8, 9, and 10. In the first embodiment, the transmission clutch is constituted by a so-called dog clutch. In the second embodiment, the transmission clutch is constituted by including a synchronizer mechanism.

As illustrated in Fig. 8, a synchronizer mechanism 154a1 is disposed among the input element (for example, the first driven gear 43b), the output element (for example, a clutch hub 153a), and the engagement element (for example, a sleeve 154a). In a case where either the input element or the output element, and the engagement element are engaged with each other, the synchronizer mechanism is operated to engage either the input element or the output element, and the engagement element with each other.

The synchronizer mechanism 154a1, when it is a constant load type, is a synchronizer hub. At a time when the synchronizer hub directly makes contact with the input element and rotations of the input element and the output element are synchronized with each other, either the input element or the output element, and the engagement element engage with each other.

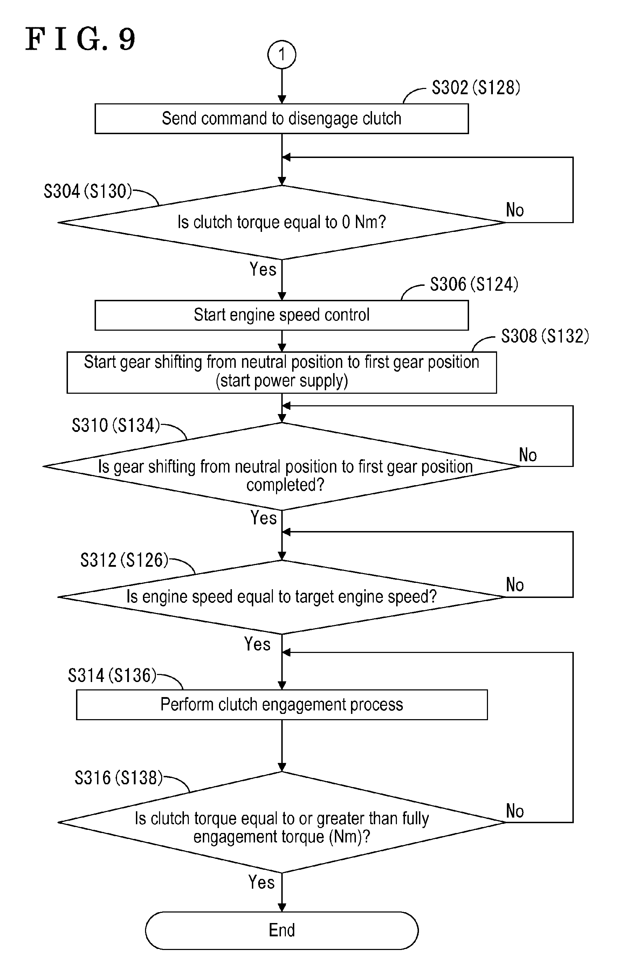

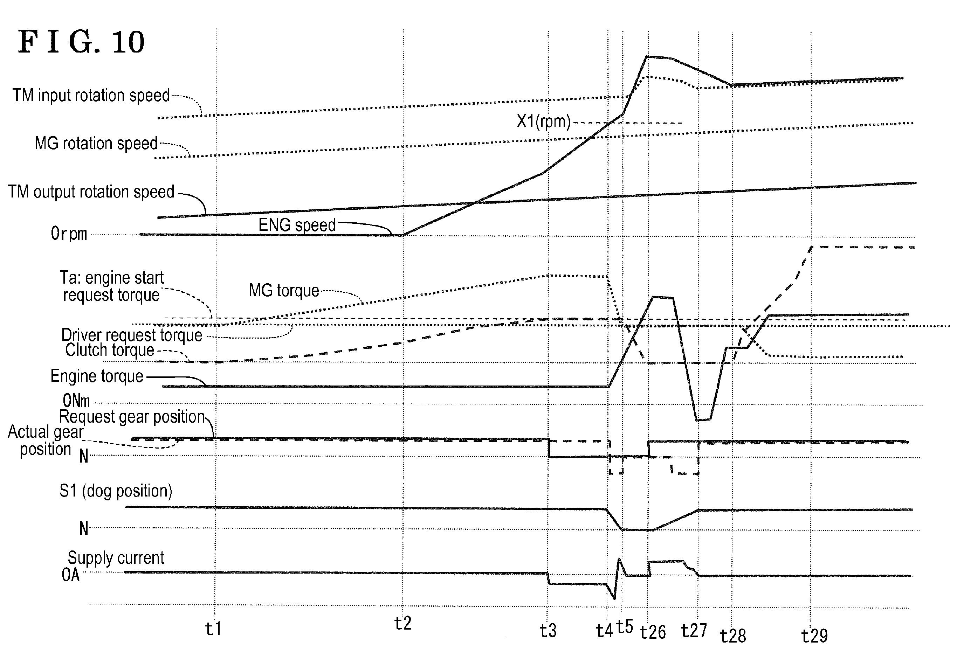

A control performed by the transmission clutch related to the synchronizer mechanism will be explained with reference to Figs. 9 and 10. At the time the gear shifting to the neutral position is completed in the flowchart in Figs. 3A and 3B (at time t5), the hybrid ECU 66 determines Yes in S120 and the program proceeds to S302. In S302, the hybrid ECU 66 transmits a command to the clutch drive mechanism 13 so that the clutch 30 is brought to the disengagement state in the same way as S128. The clutch drive mechanism 13 drives the clutch torque to turn ti zero (i.e., the clutch stroke to turn ti zero). In a case where the clutch torque turns to zero (i.e., the clutch stroke turns to zero) (at time t26 in Fig. 10), the hybrid ECU 66 determines Yes in S304 and the program proceeds to S306. The operation in S304 is similar to the operation in S130.

In S306, the hybrid ECU 66 starts the engine rotation number (engine speed) control in which a feedback control is performed on the number of rotations of the engine 11 in the same way as S124. Further, in S308 serving as a third transmission clutch re-engagement portion, the hybrid ECU 66 starts establishment of the gear position by the transmission drive mechanism 57 in the same way as S132.

In a case where the engagement element (for example, the sleeve 154a) moves towards the input element (for example, the first driven gear 43b) by the transmission drive mechanism 57, the synchronizer mechanism 154a1 also moves in the same direction. The synchronizer mechanism 154a1 makes contact with the input element so that the input element and the output element (for example, the clutch hub 153a) rotate in synchronization with each other. Further, the engagement element and the input element start meshing with each other.

When the establishment of the gear position is completed (at time t27), the hybrid ECU 66 determines Yes in S310 and the program proceeds to S312. In S310 and S312, the operations similar to the operations in S134 and S126 are performed.

In a case where the rotations of the engine 11 (engine speed) match the target engine rotations (target rotation speed) (at time t28), the hybrid ECU 66 determines Yes in S312 and the program proceeds to S314. In S314 serving as a third clutch re-engagement portion, the hybrid ECU 66 performs the clutch engagement process for bringing the clutch 30 to the fully engagement state in the same way as S136 (at time t28). In a case where the clutch torque reaches the fully engagement torque (at time t29), the hybrid ECU 66 determines Yes in S316 and terminates the clutch engagement process. The process according to the present flowchart is finished. The operation in S316 is similar to the operation in S138.

In the second embodiment, the synchronizer mechanism 154a1 (the synchronizer hub) is disposed among the input element (for example, the first driven gear 43b), the output element (for example, the clutch hub 153a), and the engagement element (for example, the sleeve 154a) in the drive apparatus for the vehicle. In a case where either the input element or the output element and the engagement element are engaged with each other, the synchronizer mechanism is operated to engage either the input element or the output element and the engagement element. Accordingly, even in the transmission 40 including the so-called synchronizer mechanism, a load applied to the clutch 30 may be restrained to be small in a case where the engine 11 is started by the motor generator 20 during the EV driving.

In addition, in the drive apparatus for the vehicle of the second embodiment, the hybrid ECU 66 further includes step S308 serving as the third transmission clutch re-engagement portion and step S314 serving as the third clutch re-engagement portion. After the engagement element (for example, the sleeve 154a) is released by the combustion of the engine 11 that is started in S116 (the engine combustion start portion), i.e., after the transmission clutch (for example, the transmission clutch 152a) is released, the clutch drive mechanism 13 is driven to bring the clutch 30 to the disengagement state (to disengage the clutch 30). In a case where the clutch torque is smaller than the predetermined value (for example, 0 Nm), step S308 serving as the third transmission clutch re-engagement portion drives the transmission drive mechanism 57 to bias the engagement element (for example, the sleeve 154a) in the engagement direction. After the transmission clutch (for example, the transmission clutch 152a) is engaged by step S308 serving as the third transmission clutch re-engagement portion, step S314 serving as the third clutch re-engagement portion drives the clutch drive mechanism 13 to bring the clutch 30 to the engagement state.

Accordingly, even in the transmission 40 including the so-called synchronizer mechanism, the clutch 30 is first disengaged and thereafter the engagement element (for example, the sleeve 154a) is moved in the engagement direction in S308 serving as the third transmission clutch re-engagement portion so that the transmission clutch (for example, the transmission clutch 152a) is brought to the engagement state by the synchronizer mechanism 154a1. Thereafter the clutch 30 is brought to the engagement state. Thus, after the transmission clutch is released and the engine 11 is started, the clutch 30 is first disengaged and then the transmission clutch is engaged. Thereafter the clutch 30 is again engaged. As a result, a load applied to the clutch 30 after the engine start is restrained to be small and each of the clutch 30 and the transmission clutch (for example, the transmission clutch 152a) may be securely engaged.

In the aforementioned embodiments, the engine 11 is formed by a gasoline engine. Alternatively, the engine 11 may be formed by a diesel engine. In such case, an ignition apparatus is not provided. Thus, the combustion start portion for starting the combustion of the engine 11 is obtained by spontaneous ignition via fuel injection into air at high temperature that is obtained by compression.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A drive apparatus for a vehicle, comprising:
a transmission (40) including an input shaft (41) inputting a driving force of an engine (11), an output shaft (42) outputting the driving force of the engine (11) that is changed at the transmission (40) to driving wheels (Wfl, Wfr), and a transmission clutch (52a, 52b, 52c) that includes an input element (43b, 45b, 53b, 53c) connected to the input shaft (41) to rotate, an output element (53a, 46a, 47a, 48a, 153a) connected to the output shaft (42) to rotate, and an engagement element (54a, 54b, 54c, 154a) connecting the input element (43b, 45b, 53b, 53c) and the output element (53a, 46a, 47a, 48a) in engageable and disengageable manner, the input element (43b, 45b, 53b, 53c) and the output element (53a, 46a, 47a, 48a) being selectively engaged and disengaged relative to each other;
a transmission drive mechanism (57) driving the engagement element (54a, 54b, 54c) of the transmission (40);
a clutch (30) selectively engaging and disengaging between an output shaft (11 a) of the engine (11) and the input shaft (41) of the transmission (40) to form an engagement state and a disengagement state;
a clutch drive mechanism (13) driving the clutch (30);
a motor generator (20) configured to output a driving force to the output shaft (42) of the transmission (40);
a clutch/motor torque increase portion (66, S104, S108) controlling the transmission clutch (52a, 52b, 52c) to be engaged to increase a clutch torque of the clutch (30) and increase a motor torque of the motor generator (20) by an amount corresponding to the increase of the clutch torque in a case where an engine start request serving as a request for starting the engine (11) is obtained during a motor driving of the vehicle that is achieved by the driving force of the motor generator (20); and
an engine combustion start portion (66, S116) starting a combustion of the engine (11) by a combustion starting member (11 b) in a case where a rotation speed of the engine (11) reaches a predetermined value (X1);
the drive apparatus being **characterized in**:
a transmission drive mechanism biasing portion (66, S112) driving the transmission drive mechanism (57) to bias the engagement element (54a, 54b, 54c) of the transmission clutch (52a, 52b, 52c) that is engaged in a release direction in a case where the clutch torque reaches an engine start request torque for starting the engine (11).

2. The drive apparatus according to claim 1, wherein either one of the input element (43b, 45b, 53b, 53c) and the output element (53a, 46a, 47a, 48a), and the engagement element (54a, 54b, 54c) include gear teeth formed by dog teeth, and the dog teeth of either one of the input element (43b, 45b, 53b, 53c) and the output element (53a, 46a, 47a, 48a), and the dog teeth of the engagement element (54a, 54b, 54c) are directly meshed with one another in a case where either one of the input element (43b, 45b, 53b, 53c) and the output element (53a, 46a, 47a, 48a), and the engagement element (54a, 54b, 54c) are engaged with each other.

3. The drive apparatus according to claim 1 or 2, further comprising a first transmission clutch re-engagement portion (66, S132) and a first clutch re-engagement portion (66, S136), wherein after the engagement element (54a, 54b, 54c) is released by the combustion of the engine (11) that is started by the engine combustion start portion (66, S116) and in a case where the rotation speed of the engine (11) reaches a target rotation speed, the clutch drive mechanism (13) is driven to bring the clutch (30) to the disengagement state, and in a case where the clutch torque is smaller than a predetermined value, the first transmission clutch re-engagement portion (66, S132) drives the transmission drive mechanism (57) to bias the engagement element (54a, 54b, 54c) in an engagement direction, the first clutch re-engagement portion (66, S136) driving the clutch drive mechanism (13) to bring the clutch (30) to the engagement state after the transmission clutch (52a, 52b, 52c) is engaged by the first transmission clutch re-engagement portion (66, S132).

4. The drive apparatus according to any one of claims 1 to 3, further comprising a second transmission clutch re-engagement portion (66, S212) and a second clutch re-engagement portion (66, S216), wherein after the engagement element (54a, 54b, 54c) is released by the combustion of the engine (11) that is started by the engine combustion start portion (66, S116), the clutch drive mechanism (13) is driven to bring the clutch (30) to the disengagement state, and in a case where the clutch torque is smaller than a predetermined value and the rotation speed of the engine (11) reaches a target rotation speed, the clutch drive mechanism (13) is driven to bring the clutch (30) in the disengagement state to the engagement state at a predetermined clutch torque (Tca) and then to the disengagement state, thereafter the second transmission clutch re-engagement portion (66, S212) drives the transmission drive mechanism (57) to bias the engagement element (54a, 54b, 54c) in an engagement direction, the second clutch re-engagement portion (66, S216) driving the clutch drive mechanism (13) to bring the clutch (30) to the engagement state after the transmission clutch (52a, 52b, 52c) is engaged by the second transmission clutch re-engagement portion (66, S212).

5. The drive apparatus according to any one of claims 1 to 4, wherein a synchronizer mechanism (154a) is disposed among the input element (43b, 45b), the output element (153a), and the engagement element (154a), and the synchronizer mechanism (154a) is operated to engage either one of the input element (43b, 45b) and the output element (153a) relative to the engagement element (154a) in order to engage either one of the input element (43b, 45b) and the output element (153a) with the engagement element (154a).

6. The drive apparatus according to any one of claims 1 to 5, further comprising a third transmission clutch re-engagement portion (66, S308) and a third clutch re-engagement portion (66, S314), wherein after the engagement element (154a) is released by the combustion of the engine (11) that is started by the engine combustion start portion (66, S116), the clutch drive mechanism (13) is driven to bring the clutch (30) to the disengagement state, and in a case where the clutch torque is smaller than a predetermined value, the third transmission clutch re-engagement portion (66, S308) drives the transmission drive mechanism (57) to bias the engagement element (154a) in an engagement direction, the third clutch re-engagement portion (66, S314) driving the clutch drive mechanism (13) to bring the clutch (30) to the engagement state after the transmission clutch (152a) is engaged by the third transmission clutch re-engagement portion (66, S308).

7. The drive apparatus according to any one of claims 1 through 6, wherein the clutch/motor torque increase portion (66, S104, S108) controls the clutch torque to increase non-linearly so that a change rate of the clutch torque is enlarged along passage of time until a point of time at which the engine rotation speed starts increasing by the increase of the clutch torque, and the change rate of the clutch torque is reduced along passage of time after the point of time at which the engine rotation speed starts increasing.

## Patentansprüche

1. Antriebsvorrichtung für ein Fahrzeug, enthaltend:
ein Getriebe (40), das eine Eingangswelle (41), die eine Antriebskraft eines Motors (11) zuführt, eine Ausgangswelle (42), die die Antriebskraft des Motors (11) ausgibt, die in dem Getriebe (40) über Antriebsräder (Wfl, Wfr) geändert wird, und eine Getriebekupplung (52a,
52b, 52c) aufweist, die ein Eingangselement (43b, 45b, 53b, 53c), das mit der Eingangswelle (41) zum Drehen verbunden ist, ein Ausgangselement (53a, 46a, 47a, 48a, 153a), das mit der Ausgangswelle (42) zum Drehen verbunden ist, und ein Eingriffselement (54a, 54b, 54c, 154a) aufweist, das das Eingangselement (43b, 45b, 53b, 53c) und das Ausgangselement (53a, 46a, 47a, 48a) in einer verbindbaren und lösbaren Art und Weise verbindet, wobei das Eingangselement (43b, 45b, 53b, 53c) und das Ausgangselement (53a, 46a, 47a, 48a) relativ zueinander selektiv verbunden und gelöst werden;
einen Getriebeantriebsmechanismus (57), der das Eingriffselement (54a, 54b, 54c) des Getriebes (40) antreibt;
eine Kupplung (30), die eine Ausgangswelle (11a) des Motors (11) und die Eingangswelle (41) des Getriebes (40) zum Schaffen eines Eingriffszustands und eines Lösungszustands verbindet und löst;
einen Kupplungsantriebsmechanismus (13), der die Kupplung (30) antreibt;
einen Motorgenerator (20), der zum Ausgeben einer Antriebskraft an die Ausgangswelle (42) des Getriebes (40) ausgebildet ist;
einen Kupplungs-/Motordrehmoment-Erhöhungsbereich (66, S104, S108), der die Getriebekupplung (52a, 52b, 52c) derart steuert, dass sie in Eingriff kommt zum Erhöhen eines Kupplungsdrehmoments der Kupplung (30) und zum Erhöhen eines Motordrehmoments des Motorgenerators (20) um einen Betrag, der dem Anstieg des Kupplungsdrehmoments in einem Fall entspricht, bei dem eine Motorstartanforderung, die als eine Anforderung zum Starten des Motors (11) dient, während eines Motorantriebs des Fahrzeugs erhalten wird, der von der Antriebskraft des Motorgenerators (20) erlangt wird; und
einen Motorverbrennungsstartbereich (66, S116), der eine Verbrennung des Motors (11) durch ein Verbrennungsstartelement (11b) in einem Fall startet, bei dem eine Drehzahl des Motors (11) einen vorgegebenen Wert (X1) erreicht;
wobei die Antriebsvorrichtung **dadurch gekennzeichnet ist, dass**:
einen Getriebeantriebsmechanismus-Vorspannbereich (66, S 112), der den Getriebeantriebsmechanismus (57) antreibt zum Vorspannen das Eingriffselement (54a, 55b, 54c) der Getriebekupplung (52a, 20b, 20c), das in einer Lösungsrichtung in einem Fall in Eingriff steht, bei dem das Kupplungsdrehmoment einen Motorstartanforderungsdrehmoment zum Starten des Motors (11) erreicht.

2. Antriebsvorrichtung nach Anspruch 1, wobei eines aus dem Eingangselement (43b, 45b, 53b, 53c) und dem Ausgangselement (53a, 46a, 47a, 48a) und das Eingriffselement (54a, 54b, 54c) Zahnräder aufweisen, die durch Mitnehmerzähne gebildet sind, und die Mitnehmerzähne des einen aus dem Eingangselement (43b, 45b, 53b, 53c) und dem Ausgangselement (53a, 46a, 47a, 48a) und die Mitnehmerzähne des Eingriffselements (54a, 54b, 54c) direkt miteinander in einem Fall kämmen, bei dem eines aus dem Eingangselement (43b, 45b, 53b, 53c) und dem Ausgangselement (53a, 46a, 47a, 48a) und das Eingriffselement (54a, 54b, 54c) miteinander in Eingriff sind.

3. Antriebsvorrichtung nach Anspruch 1 oder 2, ferner enthaltend einen ersten Getriebekupplung-Wiedereingriffsbereich (66, S 132) und einen ersten Kupplung-Wiedereingriffsbereich (66, S 136), wobei nachdem das Eingriffselement (54a, 54b, 54c) durch die Verbrennung des Motors (11) gelöst worden ist, der von dem Motorverbrennungsstartbereich (66, S116) gestartet wird, und in einem Fall, bei dem die Drehzahl des Motors (11) eine Solldrehzahl erreicht, der Kupplungsantriebsmechanismus (13) angetrieben wird zum Bringen der Kupplung (30) in den Lösungszustand, und in einem Fall, bei dem das Kupplungsdrehmoment kleiner als ein vorgegebener Wert ist, der erste Getriebekupplung-Wiedereingriffsbereich (66, S132) den Getriebeantriebsmechanismus (57) zum Vorspannen des Eingriffselements (54a, 54b, 54c) in eine Eingriffsrichtung antreibt, wobei der erste Kupplung-Wiedereingriffsbereich (66, S 136) den Kupplungsantriebsmechanismus (13) antreibt zum Bringen der Kupplung (30) in den Eingriffszustand, nachdem die Getriebekupplung (52a, 52b, 52c) durch den ersten Getriebekupplung-Wiedereingriffsbereich (66, S 132) in Eingriff gelangt ist.

4. Antriebsvorrichtung nach einem der Ansprüche 1 bis 3, ferner enthaltend einen zweiten Getriebekupplung-Wiedereingriffsbereich (66, S212) und einen zweiten Kupplung-Wiedereingriffsbereich (66, S216), wobei nachdem das Eingriffselement (54a, 54b, 54c) durch die Verbrennung des Motors (11) gelöst worden ist, der von dem Motorverbrennungsstartbereich (66, S116) gestartet wird, wird der Kupplungsantriebsmechanismus (13) angetrieben zum Bringen der Kupplung (30) in den Eingriffszustand, und in einem Fall, bei dem das Kupplungsdrehmoment kleiner ist als ein vorgegebener Wert und die Drehzahl des Motors (11) eine Solldrehzahl erreicht, wird der Kupplungsantriebsmechanismus (13) angetrieben zum Bringen der Kupplung (30) in dem Lösungszustand bei einem vorgegebenen Kupplungsdrehmoment (Tca) in den Eingriffszustand und dann in den Lösungszustand, danach treibt der zweite Getriebekupplung-Wiedereingriffsbereich (66, S212) den Getriebeantriebsmechanismus (57) zum Vorspannen des Eingriffselements (54a, 54b, 54c) in eine Eingriffsrichtung an, wobei der zweite Kupplung-Wiedereingriffsbereich (66, S216) den Kupplungsantriebsmechanismus (13) antreibt zum Bringen der Kupplung (30) in den Eingriffszustand, nachdem die Getriebekupplung (52a, 52b, 52c) durch den zweiten Getriebekupplung-Wiedereingriffsbereich (66, S212) in Eingriff gelangt ist.

5. Antriebsvorrichtung nach einem der Ansprüche 1 bis 4, wobei sich ein Synchronisationsmechanismus (154a) unter dem Eingangselement (43b, 45b), dem Ausgangselement (153a) und dem Eingriffselement (154a) befindet, und der Synchronisationsmechanismus (154a) zum Erfassen von einem aus dem Eingangselement (43b, 45b) und dem Ausgangselement (153a) relativ zu dem Eingriffselement (154a) betrieben wird, um eines aus dem Eingangselement (43b, 45b) und dem Ausgangselement (153a) mit dem Eingriffselement (154a) in Eingriff zu bringen.

6. Antriebsvorrichtung nach einem der Ansprüche 1 bis 5, ferner enthaltend einen dritten Getriebekupplung-Wiedereingriffsbereich (66, S308) und einen dritten Kupplung-Wiedereingriffsbereich (66, S314), wobei nachdem das Eingriffselement (154a) durch die Verbrennung des Motors (11) gelöst worden ist, der von dem Motorverbrennungsstartbereich (66, S116) gestartet wird, wird der Kupplungsantriebsmechanismus (13) angetrieben zum Bringen der Kupplung (30) in den Lösungszustand, und in einem Fall, bei dem das Kupplungsdrehmoment kleiner ist als ein vorgegebener Wert, treibt der dritte Getriebekupplung-Wiedereingriffsbereich (66, S308) den Getriebeantriebsmechanismus (57) zum Vorspannen des Eingriffselements (154a) in eine Eingriffsrichtung an, wobei der dritte Kupplung-Wiedereingriffsbereich (66, S314) den Kupplungsantriebsmechanismus (13) zum Bringen der Kupplung (30) in den Eingriffszustand antreibt, nachdem die Getriebekupplung (152a) durch den dritten Getriebekupplung-Wiedereingriffsbereich (66, S308) in Eingriff gelangt ist.

7. Antriebsvorrichtung nach einem der Ansprüche 1 bis 6, wobei der Kupplungs-/Motordrehmoment-Erhöhungsbereich (66, S104, S108) das Kupplungsdrehmoment zum nichtlinearen Ansteigen derart steuert, dass sich eine Änderungsrate des Kupplungsdrehmoments entlang eines Zeitablaufs bis zu einem Zeitpunkt vergrößert, bei dem die Motordrehzahl beginnt, durch den Anstieg des Kupplungsdrehmoments anzusteigen, und sich die Änderungsrate des Kupplungsdrehmoments entlang des Zeitablaufs nach dem Zeitpunkt, bei dem die Motordrehzahl beginnt sich zu erhöhen, verringert.

## Revendications

1. Appareil d'entraînement pour un véhicule, comprenant :
une transmission (40) comportant un arbre d'entrée (41) fournissant en entrée une force d'entraînement d'un moteur (11), un arbre de sortie (42) fournissant en sortie la force d'entraînement du moteur (11) s'il est modifié au niveau de la transmission (40) pour entraîner des roues (Wfl, Wfr), et un embrayage de transmission (52a, 52b, 52c) qui comporte un élément d'entrée (43b, 45b, 53b, 53c) raccordé à l'arbre d'entrée (41) pour tourner, un élément de sortie (53a, 46a, 47a, 48a, 153a) raccordé à l'arbre de sortie (42) pour tourner, et un élément de mise en prise (54a, 54b, 54c, 154a) raccordant l'élément d'entrée (43b, 45b, 53b, 53c) et l'élément de sortie (53a, 46a, 47a, 48a) en mise en prise et hors de prise, l'élément d'entrée (43b, 45b, 53b, 53c) et l'élément de sortie (53a, 46a, 47a, 48a) étant mis en prise et hors de prise sélectivement l'un par rapport à l'autre ;
un mécanisme d'entraînement de transmission (57) entraînant l'élément de mise en prise (54a, 54b, 54c) de la transmission (40) ;
un embrayage (30) se mettant en prise et hors de prise sélectivement entre un arbre de sortie (11a) du moteur (11) et l'arbre d'entrée (41) de la transmission (40) pour former un état de mise en prise et un état hors de prise ;
un mécanisme d'entraînement d'embrayage (13) entraînant l'embrayage (30) ;
un moteur-générateur (20) configuré pour fournir en sortie une force d'entraînement à l'arbre de sortie (42) de la transmission (40) ;
une partie d'augmentation de couple d'embrayage / de moteur (66, S104, S108) commandant l'embrayage de transmission (52a, 52b, 52c) pour qu'il se mette en prise afin d'augmenter un couple d'embrayage de l'embrayage (30) et augmenter un couple moteur du moteur-générateur (20) d'une quantité correspondant à l'augmentation du couple d'embrayage dans un cas où une demande de démarrage de moteur servant de demande pour démarrer le moteur (11) est obtenue pendant un entraînement moteur du véhicule qui est atteint grâce à la force d'entraînement du moteur-générateur (20) ;
et
une partie de démarrage de combustion de moteur (66, S116) démarrant une combustion du moteur (11) par un organe de démarrage de combustion (11 b) dans un cas où une vitesse de rotation du moteur (11) atteint une valeur prédéterminée (X1) ;
l'appareil d'entraînement étant **caractérisé en ce que** :
une partie de sollicitation de mécanisme d'entraînement de transmission (66, S112) entraîne le mécanisme d'entraînement de transmission (57) pour solliciter l'élément de mise en prise (54a, 54b, 54c) de l'embrayage de transmission (52a, 52b, 52c) qui est mis en prise dans une direction de dégagement dans un cas où le couple d'embrayage atteint un couple de demande de démarrage de moteur pour démarrer le moteur (11).

2. Appareil d'entraînement selon la revendication 1, dans lequel l'un ou l'autre de l'élément d'entrée (43b, 45b, 53b, 53c) et l'élément de sortie (53a, 46a, 47a, 48a), et l'élément de mise en prise (54a, 54b, 54c) comportent des dents d'engrenage formées par des dents-de-chien, et les dents-de-chien de l'un ou l'autre de l'élément d'entrée (43b, 45b, 53b, 53c) et de l'élément de sortie (53a, 46a, 47a, 48a), et les dents-de-chien de l'élément de mise en prise (54a, 54b, 54c) sont engrenées directement les unes avec les autres dans un cas où l'un ou l'autre de l'élément d'entrée (43b, 45b, 53b, 53c) et de l'élément de sortie (53a, 46a, 47a, 48a), et l'élément de mise en prise (54a, 54b, 54c) sont mis en prise l'un avec l'autre.

3. Appareil d'entraînement selon la revendication 1 ou 2, comprenant en outre une première partie de remise en prise d'embrayage de transmission (66, S132) et une première partie de remise en prise d'embrayage (66, S136), dans lequel après l'élément de mise en prise (54a, 54b, 54c) est dégagé par la combustion du moteur (11) qui est démarrée par la partie de démarrage de combustion de moteur (66, S116) et dans un cas où la vitesse de rotation du moteur (11) atteint une vitesse de rotation cible, le mécanisme d'entraînement d'embrayage (13) est entraîné pour amener l'embrayage (30) à l'état hors de prise, et dans un cas où le couple d'embrayage est inférieur à une valeur prédéterminée, la première partie de remise en prise d'embrayage de transmission (66, S132) entraîne le mécanisme d'entraînement de transmission (57) pour solliciter l'élément de mise en prise (54a, 54b, 54c) dans une direction de mise en prise, la première partie de remise en prise d'embrayage (66, S136) entraînant le mécanisme d'entraînement d'embrayage (13) pour amener l'embrayage (30) à l'état de mise en prise après que l'embrayage de transmission (52a, 52b, 52c) est mis en prise par la première partie de remise en prise d'embrayage de transmission (66, S132).

4. Appareil d'entraînement selon l'une quelconque des revendications 1 à 3, comprenant en outre une deuxième partie de remise en prise d'embrayage de transmission (66, S212) et une deuxième partie de remise en prise d'embrayage (66, S216), dans lequel après que l'élément de mise en prise (54a, 54b, 54c) est dégagé par la combustion du moteur (11) qui est démarrée par la partie de démarrage de combustion de moteur (66, S116), le mécanisme d'entraînement d'embrayage (13) est entraîné pour amener l'embrayage (30) à l'état hors de prise, et dans un cas où le couple d'embrayage est inférieur à une valeur prédéterminée et la vitesse de rotation du moteur (11) atteint une vitesse de rotation cible, le mécanisme d'entraînement d'embrayage (13) est entraîné pour amener l'embrayage (30) dans l'état hors de prise à l'état de mise en prise à un couple d'embrayage (Tca) prédéterminé puis à l'état hors de prise, ensuite la deuxième partie de remise en prise d'embrayage de transmission (66, S212) entraîne le mécanisme d'entraînement de transmission (57) pour solliciter l'élément de mise en prise (54a, 54b, 54c) dans une direction de mise en prise, la deuxième partie de remise en prise d'embrayage (66, S216) entraînant le mécanisme d'entraînement d'embrayage (13) pour amener l'embrayage (30) à l'état de mise en prise après que l'embrayage de transmission (52a, 52b, 52c) est mis en prise par la deuxième partie de remise en prise d'embrayage de transmission (66, S212).

5. Appareil d'entraînement selon l'une quelconque des revendications 1 à 4, dans lequel un mécanisme synchroniseur (154a) est disposé parmi l'élément d'entrée (43b, 45b), l'élément de sortie (153a), et l'élément de mise en prise (154a), et le mécanisme synchroniseur (154a) est actionné pour mettre en prise l'un ou l'autre de l'élément d'entrée (43b, 45b) et de l'élément de sortie (153a) par rapport à l'élément de mise en prise (154a) afin de mettre en prise l'un ou l'autre de l'élément d'entrée (43b, 45b) et de l'élément de sortie (153a) avec l'élément de mise en prise (154a).

6. Appareil d'entraînement selon l'une quelconque des revendications 1 à 5, comprenant en outre une troisième partie de remise en prise d'embrayage de transmission (66, S308) et une troisième partie de remise en prise d'embrayage (66, S314), dans lequel après que l'élément de mise en prise (154a) est dégagé par la combustion du moteur (11) qui est démarrée par la partie de démarrage de combustion de moteur (66, S116), le mécanisme d'entraînement d'embrayage (13) est entraîné pour amener l'embrayage (30) à l'état hors de prise, et dans un cas où le couple d'embrayage est inférieur à une valeur prédéterminée, la troisième partie de remise en prise d'embrayage de transmission (66, S308) entraîne le mécanisme d'entraînement de transmission (57) pour solliciter l'élément de mise en prise (154a) dans une direction de mise en prise, la troisième partie de remise en prise d'embrayage (66, S314) entraînant le mécanisme d'entraînement d'embrayage (13) pour amener l'embrayage (30) à l'état de mise en prise après que l'embrayage de transmission (152a) est mis en prise par la troisième partie de remise en prise d'embrayage de transmission (66, S308).

7. Appareil d'entraînement selon l'une quelconque des revendications 1 à 6, dans lequel la partie d'augmentation de couple d'embrayage / de moteur (66, S104, S108) commande le couple d'embrayage pour qu'il augmente de façon non linéaire de sorte qu'un taux de changement du couple d'embrayage soit agrandi avec le passage du temps jusqu'à un moment auquel la vitesse de rotation de moteur commence à augmenter grâce à l'augmentation du couple d'embrayage, et le taux de changement du couple d'embrayage est réduit avec le passage du temps après le moment auquel la vitesse de rotation de moteur commence à augmenter.
